# EUROPEAN PATENT APPLICATION

(11) **EP 2 879 365 A1**
(43) Date of publication of application: **03.06.2015**
(21) Application number: 14192007.4
(22) Date of filing: 06.11.2014
(51) Int. Cl.: H04N 1/00, G06F 3/12

(54) **Augmented Reality display device, process contents setting device, process contents setting method and non-transitory computer-readable recording medium**

(30) Priority: 21.11.2013 JP 2013241222
(71) Applicant: Konica Minolta, Inc., Tokyo 100-7015 (JP)
(72) Inventor: Sugimoto, Yasuaki, Tokyo, Tokyo 100-7015 (JP)
(74) Representative: Gille Hrabal

(57) **Abstract**

Augmented reality display device including: a display unit configured to display an augmented reality space; a camera configured to shoot the reality space; an object detecting unit configured to detect a predetermined object in the reality space; a display control unit configured to prepare a simulation image which simulatedly shows a processing result and to instruct the display unit to display the augmented reality space in which the simulation image is overlapped with the predetermined object; an operation detecting unit configured to detect an operation for the simulation image in the augmented reality space; and a setting information output unit configured to output setting information in order for the predetermined device to obtain the processing result, wherein the display control unit changes the simulation image according the operation, and the setting information output unit outputs the setting information corresponding to the changed simulation image.

## Description

### BACKGROUND OF THE INVENTION

### Field of the Invention

The present invention relates to an AR display device, a process contents setting device, a process contents setting method and a non-transitory computer-readable recording medium, for receiving the setting operation for setting the process contents to be executed for a predetermined object by a predetermined apparatus, from a user.

### Description of Related Art

In case that an original is copied, the post-processing, such as the processing in which the mark indicating "confidential" or the like is synthesized as a watermark, the folding, the binding, the punching or the like, which is carried out for the printed sheet, is often carried out. In case that such an additional processing is carried out, a user normally sets the additional processing via an operation panel of a printing apparatus. However, before the printing, it is difficult for the user to correctly estimate the finish state of the printed matter to be prepared in accordance with the set additional processing. For example, it is difficult to correctly recognize the overlap between the stable position or the punch hole and the printed character or the printed image and the positional relation therebetween.

Therefore, an image forming apparatus for reading an original by using a scanner and for preparing a preview image indicating the finish state in which the post-processing, such as the punching, is carried out for the sheet on which the read image is printed, to display the preview image on an operation panel, has been proposed (for example, see Japanese Patent Application Publication No. 2008-70835).

Further, a system comprising an image forming apparatus for outputting the printed matter in which the AR (Augmented Reality) tag for designating a predetermined image registered in a server is added to a basic original, and a portable terminal for picking up the image of the printed matter, is disclosed. In the above system, the portable terminal which picks up the image of the printed matter obtains the image (for example, a map or the like) related to the AR tag added to the printed matter from the server and the AR display of the obtained image is carried out by overlapping the obtained image around the AR tag in the image which is picked up (for example, See Japanese Patent Application Publication No. 2013-026922).

In the image forming apparatus disclosed in Japanese Patent Application Publication No. 2008-70835, in order to display the preview image of the finish state, it is necessary to read the original by using the scanner. As a result, the troublesome task is caused. Further, because the preview image is displayed on a small screen of the operation panel, it is difficult to confirm the correct finish state.

In case that there is a problem relating to the finish state which is displayed by using the preview image and the setting contents are changed, it is necessary to change the setting contents by changing the preview image to the setting window and to display the preview image again, in order to confirm the finish state to be obtained after the setting contents are changed. Therefore, the troublesome task for confirming whether the changed setting contents are suitable in accordance with the displayed finish state, is caused.

In the technology disclosed in Japanese Patent Application Publication No. 2013-026922, only the image related to the AR tag is displayed by carrying out the AR display in which the image is overlapped around the AR tag. Therefore, even though the above technology is applied and the AR display is carried out by overlapping the image of the finish state with the sheet, in case that the setting contents are changed, it is necessary to confirm the changed finish state by carrying out the AR display again after the setting contents are changed by changing the preview image to the setting window. As a result, the troublesome task for confirming whether the changed setting contents are suitable in accordance with the finish state, is caused.

The case in which the above problem is caused is not limited to the case in which an image is printed on a sheet by a printing apparatus. In case that any process is carried out for a predetermined object by a predetermined apparatus, the above problem is caused.

### SUMMARY

To achieve at least one of the abovementioned objects, an AR display device reflecting one aspect of the present invention comprises:
a display unit configured to display an augmented reality space in which an image is overlapped with a reality space;
a camera configured to shoot the reality space corresponding to the augmented reality space displayed by the display unit;
an object detecting unit configured to detect a predetermined object in the reality space shot by the camera;
a display control unit configured to prepare a simulation image which simulatedly shows a processing result to be obtained in case that a predetermined device carries out a predetermined process for the predetermined object and to instruct the display unit to display the augmented reality space in which the simulation image is overlapped with the predetermined object detected by the object detecting unit;
an operation detecting unit configured to detect an operation carried out by a user for the simulation image in the augmented reality space displayed by the display unit; and
a setting information output unit configured to output setting information in order for the predetermined device to obtain the processing result corresponding to the simulation image,
wherein the display control unit changes the simulation image according the operation detected by the operation detecting unit, and
the setting information output unit outputs the setting information corresponding to the changed simulation image to the predetermined device and reflects setting contents defined in the setting information to the predetermined device.

Preferably, the operation detecting unit detects the operation for the simulation image, which is carried out or started by using an instruction body in a state in which the instruction body contacts with the predetermined object or in a state in which the instruction body is in proximity to the predetermined object.

Preferably, the operation for the simulation image is at least one of an operation for moving the simulation image, an operation for adjusting a size of the simulation image, an operation for adjusting a density of the simulation image and an operation for deleting the simulation image.

Preferably, the display control unit deletes the simulation image in case that the simulation image is moved by the operation to a position on which the simulation image is not overlapped with the predetermined object.

Preferably, the AR display device further comprises: a setting information obtaining unit configured to obtain the setting information from an external device, which is setting information indicating process contents of the process to be carried out for the predetermined object by the predetermined device,
wherein the display control unit prepares the simulation image in accordance with the setting operation obtained by the setting information obtaining unit.

Preferably, the object detecting unit detects the predetermined object which exists in the reality space shot by the camera, and a posture of the predetermined object, and
the display control unit instructs the display unit to display the augmented reality space in which the simulation image which is corrected so as to match the simulation image with the posture of the predetermined object is overlapped with the predetermined object.

Preferably, the predetermined device is a printing device and the predetermined object is a paper sheet.

Preferably, the predetermined process includes at least one of a process for adding a stamp image to an image to be printed, a center erase process for erasing a black copy mark caused along a center line by copying a spread book, a process for adjusting a print area, a process for adding a background pattern image, a process for punching the paper sheet and a process for binding the paper sheet by a staple.

### BRIEF DESCRIPTION OF THE DRAWINGS

The present invention will become more fully understood from the detailed description given hereinafter and the accompanying drawings given by way of illustration only, and thus are not intended as a definition of the limits of the present invention, and wherein:
FIG. 1 is a view showing the configuration of the print system according to the embodiment;
FIG. 2 is a block diagram showing the schematic configuration of the image forming apparatus included in the print system according to the embodiment;
FIG. 3 is a view showing the external appearance of the head-mounted display device as the AR display device included in the print system according to the embodiment;
FIG. 4 is a block diagram showing the configuration of the head-mounted display device as the AR display device included in the print system according to the embodiment;
FIG. 5 is a block diagram showing the schematic configuration of the portable terminal as the AR display device included in the print system according to the embodiment;
FIGS. 6A to 6D are views showing an example in which the position of the stamp, such as the watermark or the like, is adjusted by using the head-mounted display device;
FIGS. 7A to 7D are views showing an example in which the size of the stamp, such as the watermark or the like, is adjusted by using the head-mounted display device;
FIGS. 8A, 8B, 9A and 9B are views showing an example in which the setting of the center erase is adjusted by using the head-mounted display device;
FIGS. 10A to 10D are views showing the operation for cancelling the output setting for adding the stamp;
FIGS. 11A to 11D are views showing an example in which the setting of the page margin range (print area) is adjusted by using the head-mounted display device;
FIGS. 12A to 12D are views showing an example in which the density of the background pattern image is adjusted by using the head-mounted display device;
FIGS. 13A to 13D are views showing an example in which the position of the characters which are embedded as a latent image in the background pattern image is adjusted by using the head-mounted display device;
FIGS. 14A to 14D are views showing an example in which the position of the staple is adjusted by using the head-mounted display device;
FIGS. 15A to 15D are views showing an example in which the position of the punch holes is adjusted by using the head-mounted display device;
FIGS. 16 and 17 are a flowchart showing the whole process which is carried out by the head-mounted display device;
FIG. 18 is a view showing the management tables indicating the sheet sizes;
FIG. 19 is a flowchart showing the process for preparing the output image;
FIG. 20 is a flowchart showing the adjusting process for adjusting the output image;
FIG. 21 is a flowchart showing the process which is carried out by the external device which receives the setting information from the head-mounted display device; and
FIG. 22 is a block diagram showing the schematic configuration of the process contents setting device included in the print system according to the embodiment.

### DETAILED DESCRIPTION OF PREFERRED EMBODIMENT

Hereinafter, a preferred embodiment of the present invention will be explained with reference to the accompanying drawings.

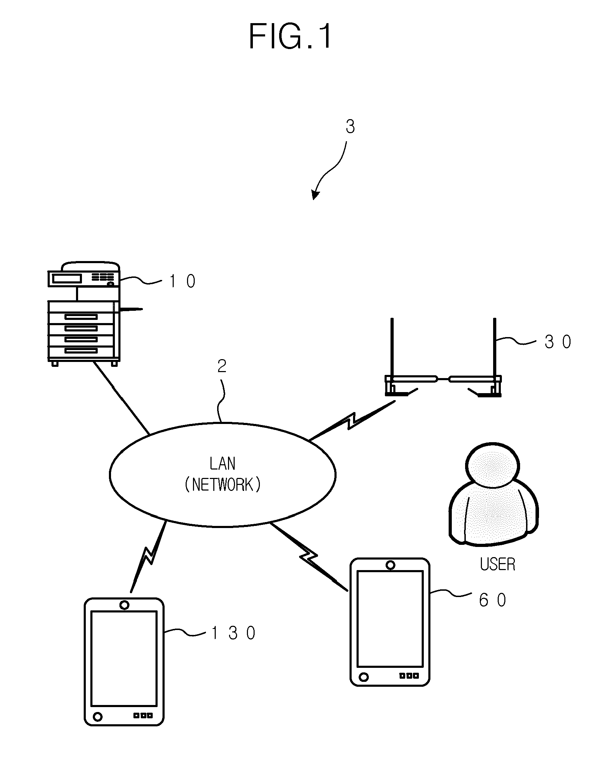

FIG. 1 shows the schematic configuration of the print system 3 according to the embodiment. The print system 3 comprises an image forming apparatus 10, a head-mounted display (HMD) device 30 having the function as the AR (Augmented Reality) display device, a portable terminal 60 having the function as the AR display device, a process contents setting device 130, which are connected with each other via a network 2, such as LAN (Local Area Network). Both of the head-mounted display device 30 and the portable terminal 60 are wirelessly connected with the network 2. The AR display device may be either one of the head-mounted display device 30 and the portable terminal 60.

The image forming apparatus 10 is a so-called multi-function peripheral (MFP) having a copy function for optically reading an original to print an image on a recording sheet, a scan function for obtaining image data by reading an original to store the image data as a file and/or to transmit the image data to an external terminal via the network 2, a printer function for printing out an image based on the print data received from an external PC (Personal Computer) or the like via the network 2 by forming the image on the recording sheet, a facsimile function for transmitting and receiving the image data in compliance with the facsimile protocol, and the like. The image forming apparatus 10 may have at least the copy function for printing an image on the recording sheet (the function of a printing apparatus).

The image forming apparatus 10 has a function for carrying out various types of additional processings for an image and/or a sheet. For example, the additional processing for an image includes a process for adding the image of the stamp, such as a watermark or the like, to an image to be printed, a process for adding a background pattern image, a center erase process for erasing a black copy mark caused along the center line by copying a spread book or the like, a frame erase process for erasing the surrounding part of the original (for example, the black copy marks caused along the borders of the original when the original is copied by opening the platen cover), a process for setting the area in which the image is not printed at the peripheral portion of the sheet in the copy process, as the page margin range, and the like.

Further, the additional processing for a sheet (a so-called post-processing) includes a process for binding a plurality of sheets by a staple, a process for punching a sheet, a process for folding a sheet, and the like. The setting relating to the above additional processing for an image and/or a sheet is referred to as the output setting.

The AR display device (the head-mounted display device 30 and/or the portable terminal 60) obtains the setting information indicating the contents of the output setting which is set to the image forming apparatus 10, from the image forming apparatus 10 or the like. Then, the AR display device prepares the output image which is a simulation image which simulatedly shows the processing result to be obtained when the image forming apparatus 10 carries out the additional processing defined in the setting information, and displays the augmented reality space in which the output image is overlapped with the sheet which exists in the reality space.

For example, when a user who wears the head-mounted display device 30 views the sheet which exists in the reality space (for example, the sheet which the user holds) in the situation in which output setting relating to the half-fold is set to the image forming apparatus 10, the head-mounted display device 30 displays the augmented reality space in which the output image corresponding to the fold line of the half-fold is overlapped with the sheet which exists in the reality space. The user who wears the head-mounted display device 30 views the above augmented reality space.

Further, the AR display device detects the operation which is carried out for the output image in the augmented reality space by the user, and changes the output image according to the detected operation. For example, when the operation for adjusting the position of the output image of the stamp, such as the watermark or the like, by moving the output image on the sheet, the operation for changing and adjusting the size of the stamp, or the like is received from the user, the AR display device changes the output image by moving or enlarging the output image according to the operation. Then, the AR display device has a function for outputting the setting information to an external device (for example, the image forming apparatus 10) in order for the image forming apparatus 10 to obtain the processing result corresponding to the changed output image, or a function for outputting the setting information to the image forming apparatus 10 to reflect the setting contents defined in the setting information to the image forming apparatus 10.

Therefore, the user can change the setting contents by carrying out the operation for the output image while the user confirms the changed state in the augmented reality space. Further, because the setting information corresponding to the changed output image is output to an external device, it is possible for the image forming apparatus 10 or the like to easily obtain the changed processing result which is confirmed in the augmented reality space, by reflecting the setting information to the image forming apparatus 10 or the like.

In this embodiment, only in case that the operation for the output image is carried out in the situation in which the instruction body, such as user's hand or finger, contacts with the sheet which exists in the reality space or in the situation in which the instruction body is in proximity to the sheet, the AR display device recognizes the operation as the valid operation. On the other hand, the AR display device does not recognize the operation or the gesture which is carried out in the air in the situation in which the instruction body is apart from the sheet, as the valid operation. The instruction body is an object to be used for carrying out the operation for the output image, and may be a pen, a stick or the like in addition to the hand, the finger and the like.

The sheet which exists in the reality space is often moved or inclined in case that the user holds the sheet. Further, the sheet which exists in the reality space is often bent. Therefore, the AR display device (the head-mounted display device 30 and/or the portable terminal 60) according to the embodiment detects the position and the posture (the direction, the shape and the like) of the sheet which exists in the reality space, and corrects the output image according to the sheet which is inclined or bent. Then, the AR display device displays the augmented reality space in which the corrected output image is overlapped with the sheet which exists in the reality space.

Therefore, regardless of the position and the posture of the sheet, the user can view the augmented reality space as if the sheet for which the set additional processing is actually carried out exists in the reality space. Further, because the AR display device carries out the detection of the position and the posture of the sheet and the correction of the output image repeatedly, even though the user moves the sheet, the output image which is corrected according to the movement of the sheet is displayed so as to overlap the corrected output image with the sheet which exists in the reality space.

The output setting to be set to the image forming apparatus 10 may be carried out by using the operation panel of the image forming apparatus 10 or by using an external terminal or a portable terminal. In this case, the AR display device obtains the initial setting information from the external terminal or the portable terminal which is used for the output setting, and displays the augmented reality space including the output image prepared in accordance with the obtained setting information. Then, the AR display device receives the operation for changing the output image, from the user.

The output setting may be carried out by firstly using the portable terminal 60 which is the AR display device. For example, the simulation image corresponding to the default setting contents may be initially displayed and the setting contents may be changed by carrying out the operation for the simulation image which is initially displayed.

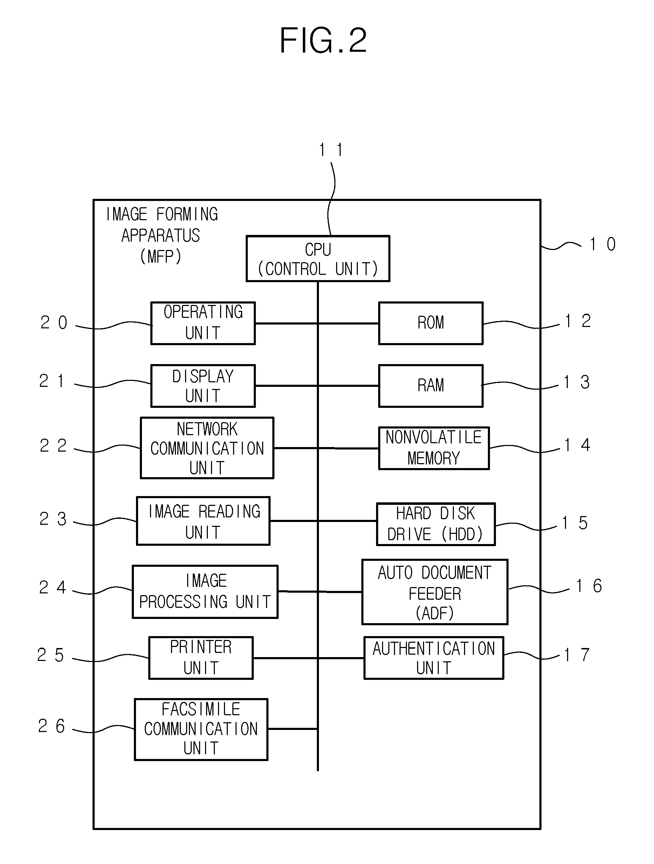

FIG. 2 is a block diagram showing the schematic configuration of the image forming apparatus 10. The image forming apparatus 10 comprises a CPU (Central Processing Unit) 11 for controlling the whole operation of the image forming apparatus 10. The CPU 11 is connected to a ROM (Read Only Memory) 12, a RAM (Random Access Memory) 13, a nonvolatile memory 14, a hard disk drive 15, an automatic document feeder (ADF) 16, an authentication unit 17, an operating unit 20, a display unit 21, a network communication unit 22, an image reading unit 23, an image processing unit 24, a printer unit 25 a facsimile communication unit 26 and the like via a bus.

By the CPU 11, a middleware, application programs and the like are executed on an OS (Operating System) program as a base. In the ROM 12, various types of programs are stored. By executing the processes by the CPU 11 in accordance with these programs, the functions of the image forming apparatus 10 are realized.

The RAM 13 is used as a work memory for temporarily storing various data when the CPU 11 executes the process in accordance with the programs and as an image memory for storing image data.

The nonvolatile memory 14 is a memory (flash memory) in which the stored contents are not damaged even if the image forming apparatus 10 is turned off, and is used for storing various setting information and the like. The hard disk drive 15 is a large-capacity nonvolatile memory device. In the hard disk drive 15, various types of programs and data are stored in addition to the print data, the image data and the like.

The image reading unit 23 has a function for optically reading an original to obtain the image data. For example, the image reading unit 23 comprises a light source for irradiating an original with light, a line image sensor for reading the original line by line in the width direction of the original by receiving the reflected light from the original, a moving unit for sequentially moving the reading position line by line in the longitudinal direction of the original, an optical system having lenses, mirrors and the like for guiding the reflected light from the original to the line image sensor and focusing the reflected light on the line image sensor, a converting unit for converting an analog image signal outputted from the line image sensor into digital image data, and the like.

The auto document feeder 16 has a function of conveying the original by feeding the original set to the original setting tray from the top sheet one by one, passing the original through the reading position of the image reading unit 23 and discharging the original to a predetermined discharge position. Further, the auto document feeder 16 has a function for automatically reversing the original to enable the image reading unit 23 to automatically read the both sides of the original. The image reading unit 23 has a function for reading the original set on a platen glass, and has a function for sequentially reading the original which is conveyed by the auto document feeder 16.

The authentication unit 17 authenticates the user who uses the image forming apparatus 10. The authenticating method may be an optional method, and in the method, a password, a fingerprint, a vein or the like may be used.

The operating unit 20 and the display unit 21 constitute the operation panel for receiving the operation, such as the entry of the job or the like, from the user. The image forming apparatus 10 receives the above-described output setting (setting relating to the additional processing) via the operation panel from the user. The display unit 21 comprises a liquid crystal display (LCD), and the like, and has a function for displaying various types of operation windows, setting windows, and the like. The operating unit 20 comprises various types of operation switches, such as a start button, and a touch panel provided on the display screen of the display unit 21. The touch panel detects the coordinate position on which the display screen of the display unit 21 is contacted by a touch pen, the user's finger or the like to operate the image forming apparatus 10.

The network communication unit 22 has a function of communicating with the AR display device, such as the head-mounted display device 30, the portable terminal 60 and the like, and an external device, such as a PC, a server, or the like, via the network 2, such as a LAN or the like.

The image processing unit 24 carries out the rasterization process for converting print data into image data, the compression/decompression process for the image data, and the like in addition to the processings, such as the enlargement/reduction and the rotation of image data.

The printer unit 25 has a function for forming an image on the recording sheet in accordance with the image data. In this embodiment, the printer unit 25 is configured as a so-called laser printer which comprises a conveying device for the recording sheet, a photoconductive drum, a charging device, a laser unit, a developing device, a transfer and separation device, a cleaning device and a fixing device, and which forms an image by the electrophotographic process. Alternatively, an image may be formed by another type of printer. Further, the printer unit 25 has a function for carrying out the post-processing, such as the stapling of the printed sheets to bind the sheets, the punching of the sheets, the folding of the sheet, and the like.

The facsimile communication unit 26 has a function of transmitting and receiving the image data to/from an external device having the facsimile function via a telephone line.

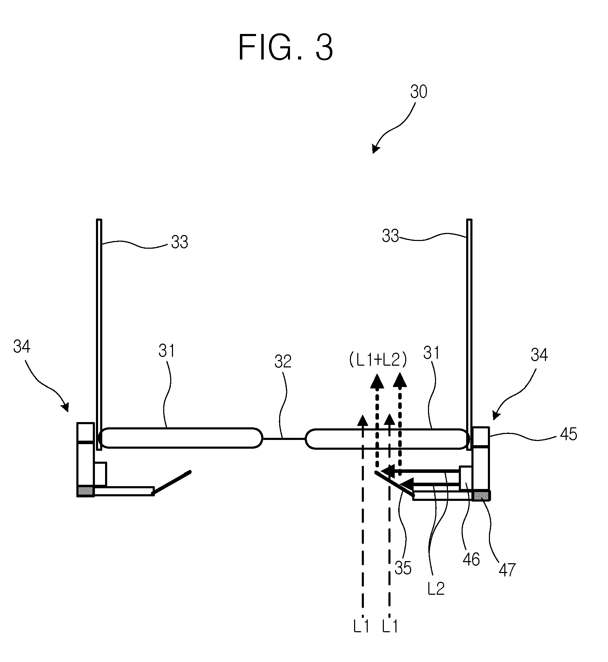

FIG. 3 shows the schematic configuration of the head-mounted display device 30. The head-mounted display device 30 has a form which is similar to that of an eye glasses, and is used by mounting it on a human's head. In the head-mounted display device 30 of this embodiment, the system in which an image is overlapped with the outside scene by using half mirrors (so-called, the light transmission type), is adopted.

The head-mounted display device 30 comprises display units 31 which are arranged in front of the user's right and left eyes, respectively when the user wears the head-mounted display device 30, a bridge 32 for connecting between the right and left display units 31, temples 33 which extend in the same direction from each end portion of the right and left display units 31 connected by the bridge 32 and which are put on the user's ears, and the like.

On each end portion of the display units 31, a main unit 34 including a control circuit, a projecting unit 46, a camera unit 47 and the like, is provided. Further, a half mirror 35 is supported by a support member extending from each of the main units 34 so as to be arranged in front of each display unit 31.

The half mirror 35 is provided so as to slant at the angle of 45 degree with respect to the light L1 which is incident from the front of the head-mounted display device 30 to the display unit 31. The projecting unit 46 of the main unit 34 projects the image (which is the image light L2 for forming the augmented reality information) to the half mirror 35. The half mirror 35 is formed by coating a reflective film (a metal film and a dielectric film) on a transparent substrate (glass substrate). In the half mirror 35, the ratio of the amount of the transmitted light to the amount of the reflected light is 1:1.

The light obtained by synthesizing the outside light L1 and the image light L2 at the ratio of 1:1 is incident to eyes of the user who wears the head-mounted display device 30 via the display units 31. That is, the user who wears the head-mounted display device 30 views the situation which is obtained by overlapping the outside scene with the image projected by the projecting unit 46 at the transmittance of 50%.

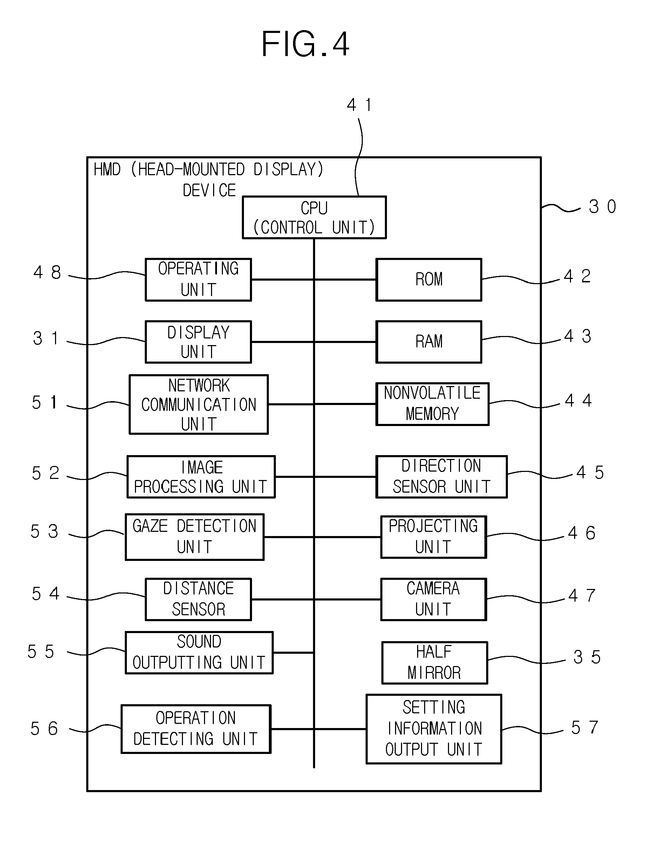

FIG. 4 is a block diagram showing the configuration of the head-mounted display device 30. The head-mounted display device 30 comprises a CPU 41 which functions as a control unit, a ROM 42, a RAM 43, a nonvolatile memory 44, a direction sensor unit 45, the projecting unit 46, the camera unit 47, an operating unit 48, the display unit 31, a network communication unit 51, an image processing unit 52, a gaze detection unit 53, a distance sensor 54, a sound outputting unit 55, an operation detecting unit 56, a setting information output unit 57 and the like, which are connected with the CPU 41 via a bus.

The CPU 41 controls the operation of the head-mounted display device 30 in accordance with programs stored in the ROM 42 or the nonvolatile memory 44. Further, the CPU 41 also functions as the display control unit for instructing the display unit 31 to display the augmented reality space in which the simulation image is overlapped with the predetermined object. Further, the CPU 41 functions as the object detecting unit for detecting a predetermined object (for example, the sheet) in the reality space shot by the camera unit 47. In the ROM 42, the programs, the fixed data and the like are stored. The RAM 43 is used as a work memory for temporarily storing various data when the CPU 41 executes the programs. In the nonvolatile memory 44, various types of setting information, application programs and the like are stored.

The direction sensor unit 45 detects the direction and the posture of the head-mounted display device 30 and the change in the direction and the posture. The direction sensor unit 45 comprises a plurality of geomagnetic sensors and a plurality of acceleration sensors so as to combine them. The direction sensor unit 45 detects the posture of the user who wears the head-mounted display device 30, the direction in which the user faces and the angle at which the user faces (the direction and the angle which are detected by the direction sensor unit 45 are coincident with the shooting direction and the shooting angle of the camera unit 47). Further, in case that the head-mounted display device 30 is inclined, the direction sensor unit 45 detects the direction and the speed of the motion of the head-mounted display device 30. Then, the direction sensor unit 45 transmits the detection result to the CPU 41. In accordance with the detection result transmitted from the direction sensor unit 45, the CPU 41 recognizes the posture of the user who wears the head-mounted display device 30, the angle of the head-mounted display device 30, and the direction and the speed of the motion of the head-mounted display device 30, which is caused by inclining the head-mounted display device 30.

The projecting unit 46 projects the image (which is the image light L2 for forming the augmented reality information), toward the half mirror 35 as described above.

The camera unit 47 carries out the shooting in the front direction of the head-mounted display device 30. In detail, the camera unit 47 carries out the shooting in the range which is substantially the same as the user's field of view in case that the user looks forward. The camera unit 47 may be provided on each of the right and left main units 34, or on one of the right and left main units 34. The camera unit 47 takes the movie, for example, the camera unit 47 takes the images at 30 frames per second.

The operating unit 48 comprises switches and the like which are provided in the main units 34 and the like, and is used for adjusting the brightness of the projected image and the like.

The network communication unit 51 has a function of communicating with an external device, such as the image forming apparatus 10 and the like, via the network 2 including the wireless LAN. Further, the network communication unit 51 functions as the setting information obtaining unit for obtaining the setting information indicating the contents of the output setting for the image forming apparatus 10, from the external device.

The image processing unit 52 prepares and corrects (enlarges, reduces and deforms) the image (the above-described output image, or the like) to be projected to each display unit 31 from each projecting unit 46 via each half mirror 35, or assists the preparation and the correction of the image.

The gaze detection unit 53 detects the gaze of the user who wears the head-mounted display device 30 (what the user views). The gaze detecting method may be an optional method. For example, a camera for shooting the user's eyes is provided, and the shot image obtained by the camera is analyzed to detect the user's gaze from the direction of the user's face, the position of the pupil in the user's eye, and the like. The head-mounted display device 30 can recognize the place which is viewed by the user who wears the head-mounted display device 30, by detecting the user's gaze with the gaze detection unit 53.

The distance sensor 54 measures the distances from the head-mounted display device 30 to various types of objects which exist in the shooting range of the camera unit 47, or the distance from the head-mounted display device 30 to the object which is viewed by the user who wears the head-mounted display device 30. Further, the distance sensor 54 measures the distance to the hand or the finger which is used for the operation carried out by the user who wears the head-mounted display device 30. For example, the distance sensor 54 is configured by an ultrasonic sensor.

The sound outputting unit 55 is used in case that the warning is output as the sound. The operation detecting unit 56 and the setting information output unit 57 will be explained below.

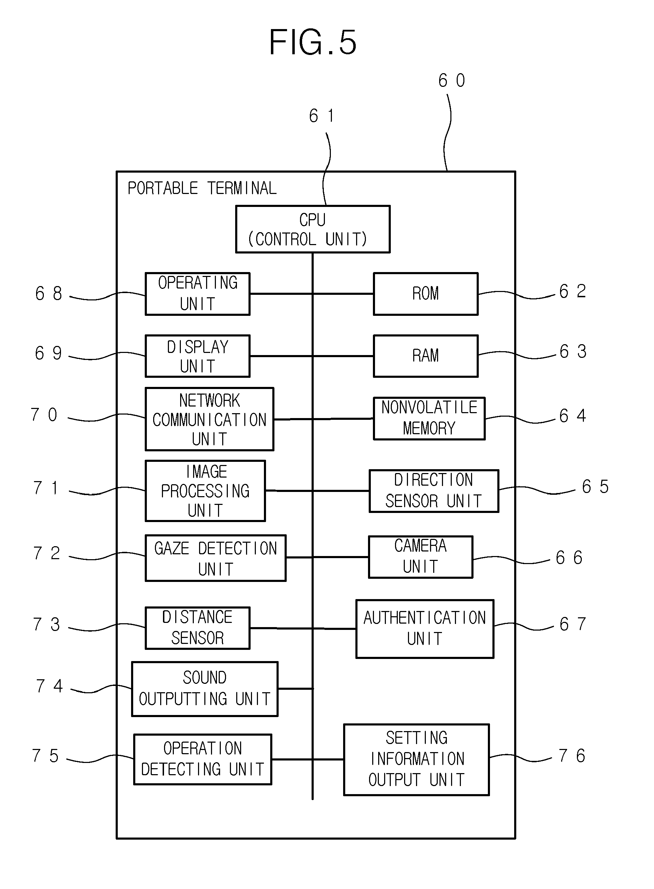

FIG. 5 shows the schematic configuration of the portable terminal 60. The portable terminal 60 comprises a CPU 61, a ROM 62, a RAM 63, a nonvolatile memory 64, a direction sensor unit 65, a camera unit 66, an authentication unit 67, an operating unit 68, a display unit 69, a network communication unit 70, an image processing unit 71, a gaze detection unit 72, a distance sensor 73, a sound outputting unit 74, an operation detecting unit 75, a setting information output unit 76 and the like, which are connected with the CPU 61 via a bus.

The CPU 61 controls the operation of the portable terminal 60 in accordance with programs stored in the ROM 62 or the nonvolatile memory 64. Further, the CPU 61 also functions as the display control unit for instructing the display unit 69 to display the augmented reality space in which the simulation image is overlapped with the predetermined object. Further, the CPU 61 functions as the object detecting unit for detecting a predetermined object (for example, the sheet) in the reality space shot by the camera unit 66. In the ROM 62, the programs, the fixed data and the like are stored. The RAM 63 is used as a work memory for temporarily storing various data when the CPU 61 executes the programs. In the nonvolatile memory 64, various types of setting information and application programs are stored.

The direction sensor unit 65 detects the direction and the posture of the portable terminal 60 and the change in the direction and the posture. The direction sensor unit 65 has the same configuration as the direction sensor unit 45 of the head-mounted display device 30. The camera unit 66 is provided on the rear surface of the portable terminal 60 and carries out the shooting in the direction in which the rear surface of the portable terminal 60 faces. The camera unit 66 takes the movie, for example, the camera unit 66 takes the images at 30 frames per second.

The authentication unit 67 authenticates the user who uses the portable terminal 60. The authenticating method may be an optional method, and in the method, a password, a fingerprint, a vein or the like may be used.

The display unit 69 comprises a liquid crystal display and the like. The operating unit 68 comprises a touch panel provided on the display screen of the display unit 69, and the like.

The network communication unit 70 has a function of communicating with an external device, such as the image forming apparatus 10, and the like, via the network 2 including a wireless LAN or the like. Further, the network communication unit 70 functions as the setting information obtaining unit for obtaining the setting information indicating the contents of the output setting for the image forming apparatus 10, from the external device.

The image processing unit 71 prepares and corrects (enlarges, reduces and deforms) the image (the above-described output image, or the like) to be synthesized with the shot image obtained by the camera unit 66, or assists the preparation and the correction of the image.

The gaze detection unit 72 detects the gaze of the user who uses the portable terminal 60 (what the user views). The gaze detecting method may be an optional method. For example, a camera for shooting the user's face and eyes is provided, and the shot image obtained by the camera is analyzed to detect the user's gaze from the direction of the user's face, the position of the pupil in the user's eye, and the like. The portable terminal 60 recognizes the place which is viewed by the user who uses the portable terminal 60, by detecting the user's gaze with the gaze detection unit 72.

The distance sensor 73 measures the distances from the portable terminal 60 to various types of objects which exist in the shooting range of the camera unit 66, or the distance from the portable terminal 60 to the object which is viewed by the user who uses the portable terminal 60. Further, the distance sensor 73 measures the distance to the hand or the finger of the user who uses the portable terminal 60. For example, the distance sensor 73 is configured by an ultrasonic sensor like the distance sensor 54 of the head-mounted display device 30.

The sound outputting unit 74 is used in case that the warning is output as the sound. The operation detecting unit 75 and the setting information output unit 76 will be explained below.

In the head-mounted display device 30, the image is displayed by overlapping the output image with the information from the reality space. On the other hand, in case of the portable terminal 60, the image obtained by overlapping the output image with the sheet in the shot image obtained by the camera unit 66, is displayed on the display unit 69. The user views the augmented reality space displayed on the display unit 69 of the portable terminal 60.

The CPU 41 or 61 of the AR display device (the head-mounted display device 30 and/or the portable terminal 60) detects the sheet which exists in the shot image obtained by the camera unit 47 or 66 and the position and the posture of the sheet by analyzing the shot image. Further, the AR display device measures the distance from the AR display device to the detected sheet by using the distance sensor 54 or 73, and recognizes the size of the actual sheet in accordance with the measured distance and the size of the image of the sheet which exists in the shot image. Further, by measuring the distance from the AR display device to each portion of the sheet with the distance sensor 54 or 73 and by collecting and analyzing the measured distance, the AR display device recognizes the three-dimension shape (slant, bentness, fold and the like) of the sheet viewed from the head-mounted display device 30 or the portable terminal 60. For example, the recognition of the three-dimension shape can be carried out by using the known technology disclosed in Japanese Patent Application Publication No. 2008-26243 and the corresponding US Patent Application Publication No. 2008/0024795A1 which are herein incorporated by reference. The posture of the sheet and the three-dimensional shape which is viewed from the head-mounted display device 30 or the portable terminal 60 may be recognized by using a stereo camera as the camera unit 47 or 66 and by analyzing the video obtained by the stereo camera.

Further, the AR display device (the head-mounted display device 30 and/or the portable terminal 60) comprises the operation detecting unit 56 or 75 for detecting the operation carried out by the user for the output image on the sheet by analyzing the shot image obtained by the camera unit 47 or 66. In detail, the operation detecting unit 56 or 75 measures the distance to the sheet and the distance to the instruction body (the user's hand or finger) used for the operation and compares the two measured distances. In case that the difference between the two distances is within the predetermined acceptable range, the operation detecting unit 56 or 75 judges that the operation is carried out for the output image on the sheet. In case that the above difference is not within the predetermined acceptable range, the operation detecting unit 56 or 75 judges that the operation is not carried out for the output image on the sheet.

Next, the operation of the AR display device will be explained.

In this embodiment, the head-mounted display device 30 will be explained as an example.

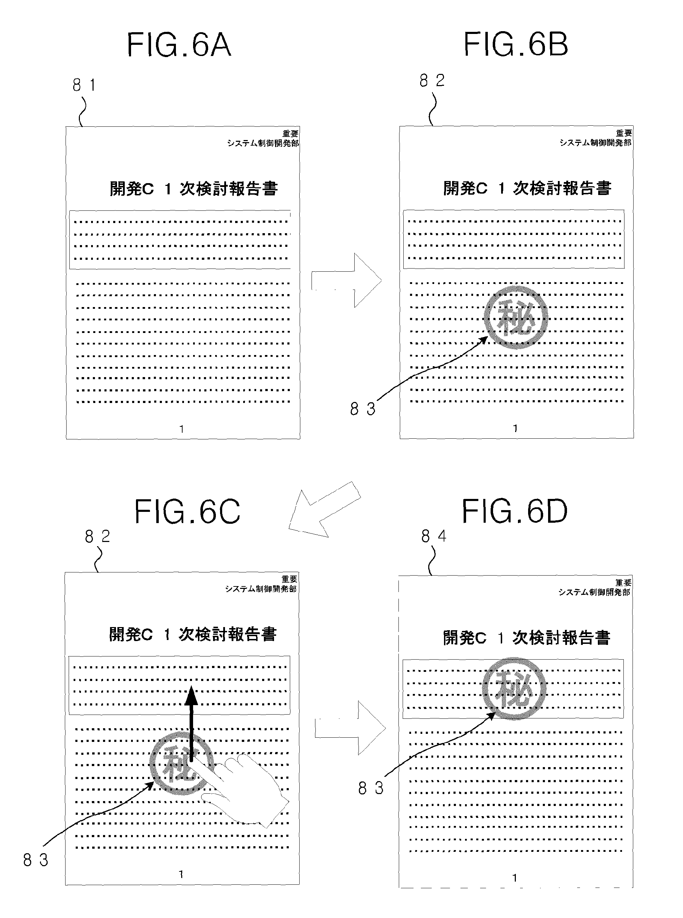

In FIGS. 6A to 15D, the sheet which exists in the reality space (referred to as the sheet before the output setting), the sheet which exists in the augmented reality space in which the output image is overlapped with the sheet which exists in the reality space (referred to as the sheet after the output setting (before the adjustment)), the situation in which the user carries out the operation for the output image, and the sheet which exists in the augmented reality space after the image is changed according to the operation (referred to as the sheet after the output setting (after the adjustment)) are shown so as to compare them. Each of the sheet after the output setting (before the adjustment), the situation in which the operation is carried out and the sheet after the output setting (after the adjustment) shows the situation which is viewed by the user who wears the head-mounted display device 30.

FIGS. 6A to 6D show an example in which the position of the stamp, such as the watermark or the like, is adjusted by using the head-mounted display device 30. FIG. 6A shows the sheet 81 before the output setting. FIG. 6B shows the sheet 82 after the output setting (before the adjustment) in case that the output setting for adding the stamp, such as the watermark or the like, is carried out. In the sheet 82 after the output setting (before the adjustment), which is shown in FIG. 6B, the output image 83 corresponding to the stamp having the type and the size designated in the output setting is overlapped with the sheet at the position designated in the output setting. Therefore, the user who wears the head-mounted display device 30 can previously (before the printing) confirm the positional relation between the contents (characters and/or an image) which have been already printed on the sheet 81 before the output setting and the stamp to be added in accordance with the output setting and the relation of the densities thereof, by viewing the sheet 82 after the output setting (before the adjustment), which is displayed by carrying out the AR display in the head-mounted display device 30.

FIG. 6C shows the situation in which the user operates and moves the output image 83 corresponding to the stamp by using the user's finger. The above operation is an operation which is carried out in the state in which the user's finger contacts with or is in proximity to the sheet which exists in the reality space (the output image which is displayed on the sheet which exists in the augmented reality space). In this embodiment, in order to move the output image 83 corresponding to the stamp to the intended position, the drag operation is carried out.

When the head-mounted display device 30 detects the above operation for the output image 83 corresponding to the stamp, the head-mounted display device 30 moves the display position of the output image 83 according to the detected operation. FIG. 6D shows the situation in which the output image 83 has been moved (the sheet 84 after the output setting (after the adjustment)). The head-mounted display device 30 outputs the setting information to an external device in order for the image forming apparatus 10 to obtain the processing result corresponding to the output image 83 of which the position has been adjusted, or reflects the setting contents defined in the output setting information to the setting of the external device. That is, the head-mounted display device 30 (AR display device) comprises the setting information output unit 57 for outputting the setting information in order for the external device to obtain the processing result corresponding to the simulation image. The portable terminal 60 which is used as the AR display device has the same function (the setting information output unit 76).

As described above, the user who wears the head-mounted display device 30 can change the contents of the output setting relating to the additional processing for the stamp, by carrying out the operation for directly moving the output image 83 of the stamp which is displayed by carrying out the AR display in the head-mounted display device 30, while the user confirms the changed position of the output image 83 by using the AR display.

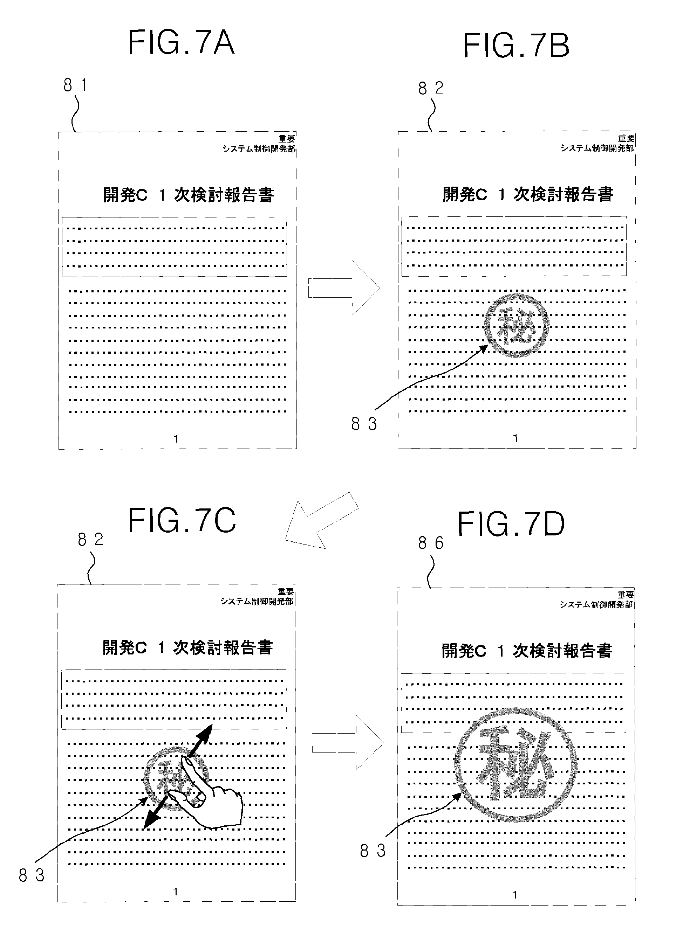

FIGS. 7A to 7D show an example in which the size of the stamp, such as the watermark or the like, is adjusted by using the head-mounted display device 30. FIG. 7A shows the sheet 81 before the output setting. FIG. 7B shows the sheet 82 after the output setting in case that the output setting for adding the stamp, such as the watermark or the like, is carried out.

FIG. 7C shows the situation in which the user operates the output image 83 corresponding to the stamp by using the user's finger to change the size of the output image 83. The above operation is an operation which is carried out in the state in which the user's finger contacts with or is in proximity to the sheet which exists in the reality space (the output image which is displayed on the sheet which exists in the augmented reality space). In this embodiment, in order to enlarge the output image 83, the pinch-out operation is carried out for the output image 83.

When the head-mounted display device 30 detects the above operation for the output image 83, the head-mounted display device 30 changes the size of the output image 83 according to the detected operation. FIG. 7D shows the situation in which the output image 83 has been enlarged (the sheet 86 after the output setting (after the adjustment)). The head-mounted display device 30 outputs the setting information to an external device in order for the image forming apparatus 10 to obtain the processing result corresponding to the output image 83 of which the size has been changed, or reflects the setting contents defined in the output setting information to the setting of the external device.

As described above, the user who wears the head-mounted display device 30 can change the contents of the output setting relating to the additional processing for the stamp, by carrying out the operation (the pinch-out operation or the pinch-in operation) for directly changing the size of the output image 83 of the stamp which is displayed by carrying out the AR display in the head-mounted display device 30, while the user confirms the changed size of the output image 83 by using the AR display.

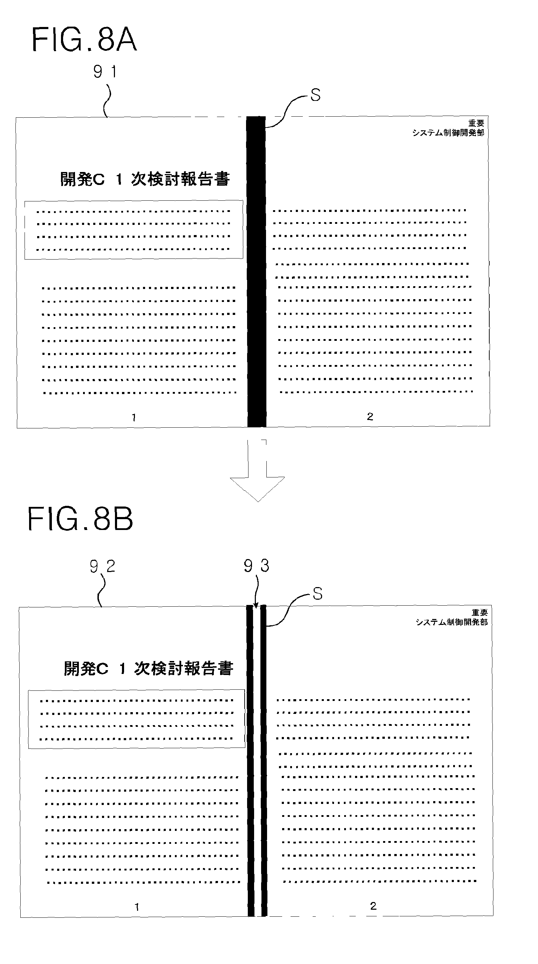

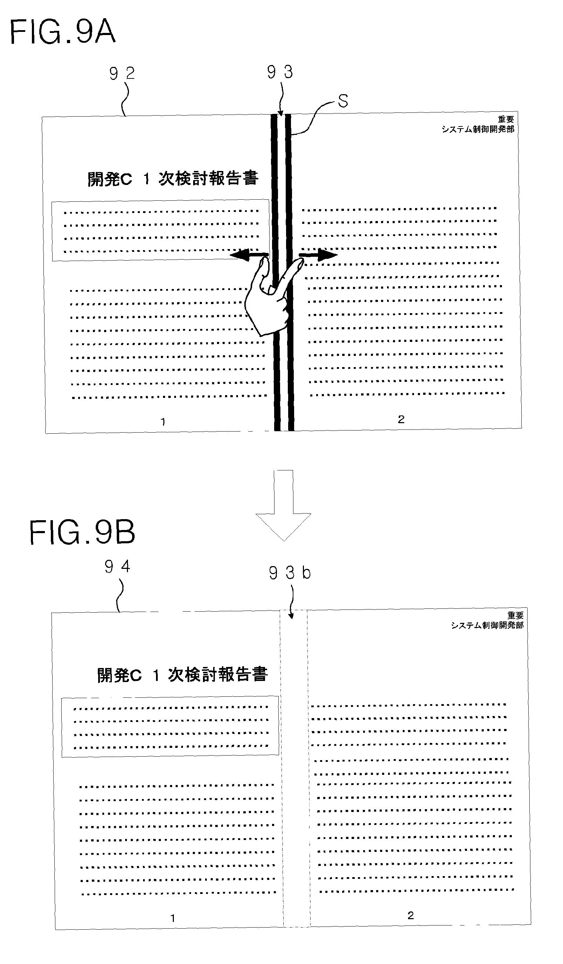

FIGS. 8A, 8B, 9A and 9B show an example in which the setting of the center erase is adjusted by using the head-mounted display device 30. FIG. 8A shows the sheet 91 before the output setting. FIG. 8B shows the sheet 92 after the output setting (before the adjustment) in case that the output setting for the center erase is carried out. In the sheet 92 after the output setting (before the adjustment), the output image 93 indicating that the black copy mark S caused along the center portion of the sheet 91 is erased (is masked with white or the color of the sheet) is overlapped with the sheet 91 before the output setting.

The user who wears the head-mounted display device 30 can previously confirm the processing result to be obtained by carrying out the center erase process for the sheet 91 before the output setting, by viewing the sheet 92 after the output setting, which is displayed by carrying out the AR display in the head-mounted display device 30. For example, the user can confirm whether the black copy mark S is completely erased by the center erase process.

In FIG. 8B, the setting of the center erase process is not proper, and the black copy mark S is not completely erased. FIG. 9A shows the situation in which the user changes the erasing range (the width and/or the length) by operating the output image 93 corresponding to the center erase process by using the user's finger. The above operation is an operation which is carried out in the state in which the user's finger contacts with or is in proximity to the sheet which exists in the reality space (the output image which is displayed on the sheet which exists in the augmented reality space). In this embodiment, in order to spread the width of the output image 93 having the longitudinal white strip shape, the pinch-out operation is carried out for the output image 93.

When the head-mounted display device 30 detects the above operation for the output image 93, the head-mounted display device 30 changes the width and/or the length of the output image 93 according to the detected operation. FIG. 9B shows the sheet 94 after the output setting (after the adjustment) in which the output image 93b which has been changed according to the above operation is overlapped. In FIG. 9B, the outer edge of the output image 93b is shown by the dashed line. The head-mounted display device 30 outputs the setting information to an external device in order for the image forming apparatus 10 to obtain the processing result of the center erase process corresponding to the changed output image 93b, or reflects the setting contents defined in the output setting information to the setting of the external device.

As described above, the user who wears the head-mounted display device 30 can change the contents of the output setting relating to the center erase process, by carrying out the operation (the pinch-out operation or the pinch-in operation) directly for the output image 93 which is displayed by carrying out the AR display in the head-mounted display device 30, while the user confirms the range to be erased.

Next, the operation for deleting (cancelling) the output setting will be explained.

In this embodiment, when the selected output image is moved to the portion which is not overlapped with the sheet (out of the sheet) by the drag operation, the AR display device deletes the output image from the augmented reality space and outputs the setting information indicating that the output setting relating to the additional processing corresponding to the deleted output image is deleted (cancelled).

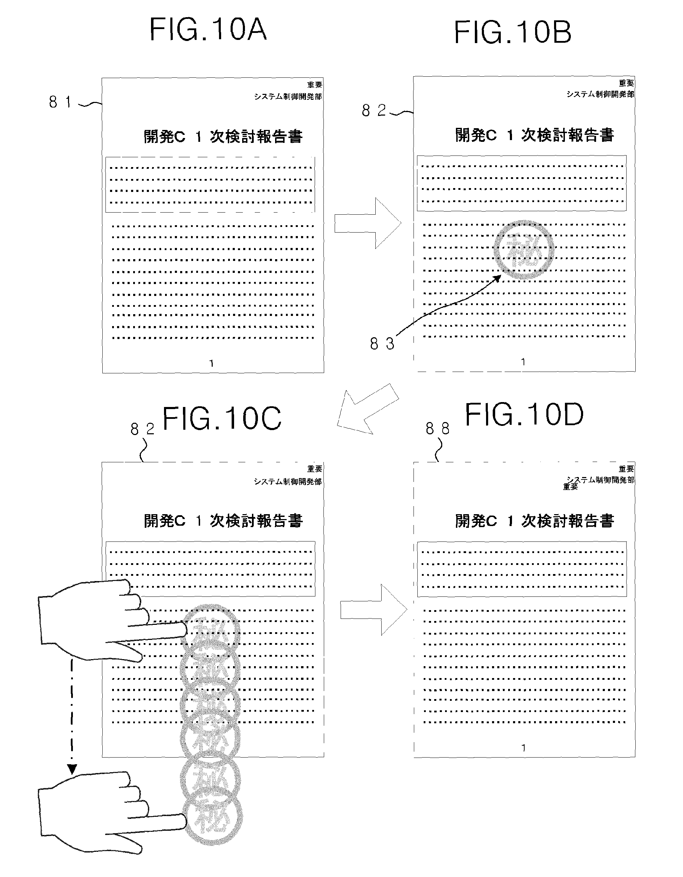

FIGS. 10A to 10D show the operation for cancelling the output setting for adding the stamp. FIG. 10A shows the sheet 81 before the output setting. FIG. 10B shows the sheet 82 after the output setting (before the adjustment) in case that the output setting for adding the stamp, such as the watermark or the like, is carried out.

FIG. 10C shows the situation in which the user operates the output image 83 corresponding to the stamp by using the user's finger to move the output image 83 out of the sheet. The above operation is an operation which is carried out in the state in which the user's finger contacts with or is in proximity to the sheet which exists in the reality space (the output image which is displayed on the sheet which exists in the augmented reality space). In this embodiment, in order to move the output image 83 corresponding to the stamp out of the sheet, the drag operation is carried out.

When the head-mounted display device 30 detects the above operation for the output image 83, the head-mounted display device 30 moves the display position of the output image 83 according to the detected operation. When the drag operation is finished out of the sheet, as shown in FIG. 10D, the head-mounted display device 30 displays the sheet in which the output image 83 is deleted (the sheet 88 after the output setting (after the adjustment)) in the augmented reality space. The head-mounted display device 30 outputs the setting information indicating that the setting of the additional processing for the stamp corresponding to the output image 83 is deleted (cancelled), to an external device, or reflects the setting contents defined in the output setting information to the setting of the external device.

As described above, the user who wears the head-mounted display device 30 can cancel the setting of the additional processing corresponding to the output image, by carrying out the operation for moving the output image displayed by carrying out the AR display in the head-mounted display device 30, out of the sheet.

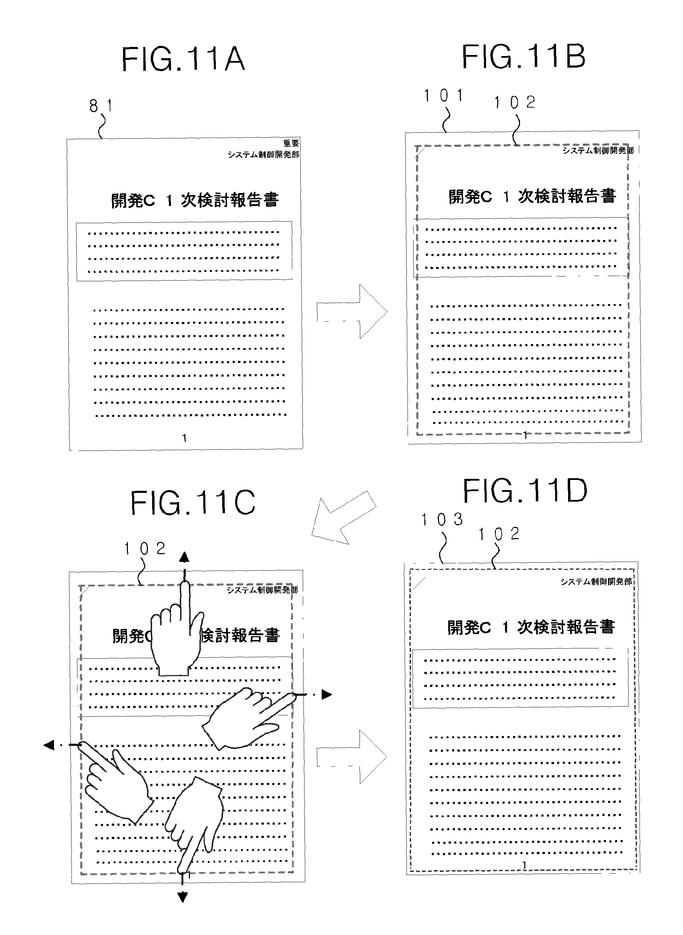

FIGS. 11A to 11D show an example in which the setting of the page margin range (print area) is adjusted by using the head-mounted display device 30. FIG. 11A shows the sheet 81 before the output setting. FIG. 11B shows the sheet 101 after the output setting (before the adjustment) in case that the output setting for the page margin range is carried out. In the sheet 101 after the output setting (before the adjustment), which is shown in FIG. 11B, the output image 102 of the border line indicating the border between the page margin range which is the peripheral portion of the sheet and the inside area thereof is overlapped on the position designated in the output setting. Therefore, the user who wears the head-mounted display device 30 can previously (before the printing) confirm the page margin range in which an image is not printed by the copy, on the original.

In FIG. 11B, the characters and/or the image which are described in the sheet exist in the page margin range. Therefore, in order to warn the user, the output image 102 of the border line is indicated by, for example, red. Further, the warning message may be displayed.

FIG. 11C shows the situation in which the user operates and moves the output image 102 indicating the border line of the page margin range by using the user's finger. The above operation is carried out in the state in which the user' s finger contacts with or is in proximity to the sheet which exists in the reality space (the output image which is displayed on the sheet which exists in the augmented reality space). In this embodiment, in order to move the output image 102 indicating the border line to the outside little by little, the drag operation is carried out.

When the head-mounted display device 30 detects the above operation for the output image 102 of the border line indicating the page margin range, the head-mounted display device 30 moves the display position of the output image 102 according to the detected operation. FIG. 11D shows the situation in which the output image 102 has been moved (the sheet 103 after the output setting (after the adjustment)). In the situation in which the output image 102 has been moved, the character and/or the image which are described in the sheet are not included in the page margin range. Therefore, the output image 102 of the border line is indicated by blue. In case that the warning message is displayed in FIG. 11B, the warning message is deleted.

The head-mounted display device 30 outputs the setting information to an external device in order to for the image forming apparatus 10 to obtain the processing result corresponding to the output image 103 of which the position has been adjusted, or reflects the setting contents defined in the output setting information to the setting of the external device.

As described above, the user who wears the head-mounted display device 30 can change the contents of the output setting relating to the page margin range by carrying out the operation for directly moving the output image 102 of the border line indicating the page margin range which is displayed by carrying out the AR display in the head-mounted display device 30, while the user confirms the changed position of the border line by using the AR display.

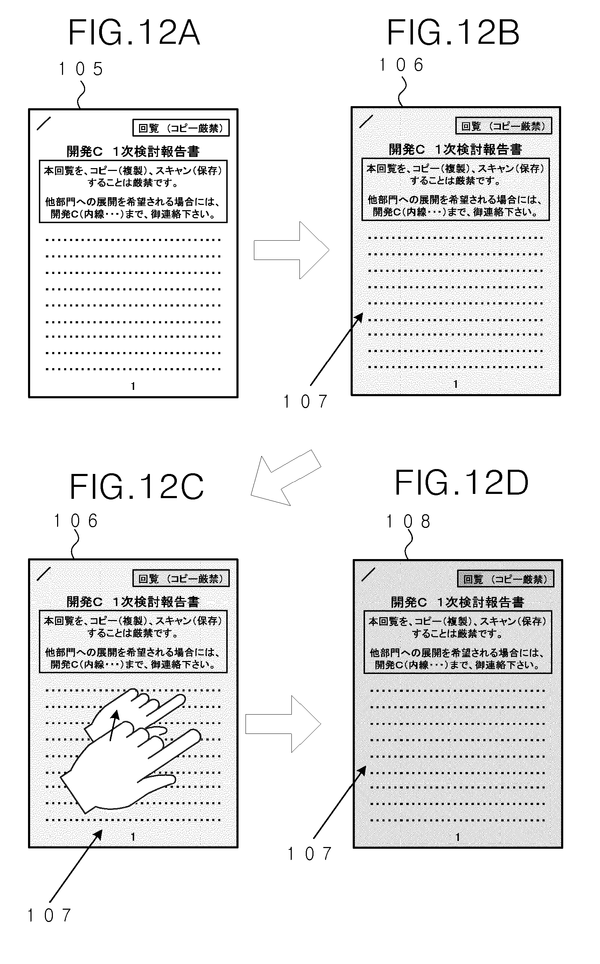

FIGS. 12A to 12D show an example in which the density of the background pattern image is adjusted by using the head-mounted display device 30. FIG. 12A shows the sheet 105 before the output setting. FIG. 12B shows the sheet 106 after the output setting (before the adjustment) in case that the output setting for adding the background pattern image is carried out. In the output setting for adding the background pattern image, the pattern of the background pattern image, the characters and/or the image to be embedded, the position thereof, the density of the background pattern image and the like are set. In the sheet 106 after the output setting (before the adjustment), which is shown in FIG. 12B, the output image 107 corresponding to the background pattern image (in the drawings, the gray background is shown) is overlapped with the sheet. Therefore, the user who wears the head-mounted display device 30 can previously (before the printing) confirm the contrast between the contents (characters and/or an image) which have been already printed on the sheet 105 before the output setting and the background pattern image to be drawn in accordance with the output setting, and the like, by viewing the sheet 106 after the output setting, which is displayed by carrying out the AR display in the head-mounted display device 30.

FIG. 12C shows the situation in which the user operates the output image 107 corresponding to the background pattern image by using the user's finger or hand to adjust the density of the background pattern image. The above operation is carried out in the state in which the user's finger or hand is in proximity to the sheet which exists in the reality space (the output image which is displayed on the sheet which exists in the augmented reality space). In the above operation, firstly, after the user's hand or finger contacts with the output image 107 corresponding to the background pattern image, the user's hand or finger is separated from the sheet by a predetermined distance and is held for a predetermined time (for example, 1 second). Then, in case that the user distances the user's hand or finger from the sheet, the density of the background pattern image is decreased. In case that the user approaches the user' s hand or finger to the sheet, the density of the background pattern image is increased. In the example shown in the drawings, the operation for increasing the density of the background pattern image is carried out.

When the head-mounted display device 30 detects the above operation for the output image 107 of the background pattern image, the head-mounted display device 30 changes the density of the output image 107 according to the detected operation. FIG. 12D shows the situation in which the density of the output image 107 has been increased (the sheet 108 after the output setting (after the adjustment)). The head-mounted display device 30 outputs the setting information to an external device in order for the image forming apparatus 10 to obtain the processing result corresponding to the output image 107 of which the density has been adjusted, or reflects the setting contents defined in the output setting information to the setting of the external device.

As described above, the user who wears the head-mounted display device 30 can change the contents of the output setting relating to the background pattern image, by carrying out the predetermined operation for the output image 107 of the background pattern image which is displayed by carrying out the AR display in the head-mounted display device 30, while the user confirms the changed density of the background pattern image by using the AR display.

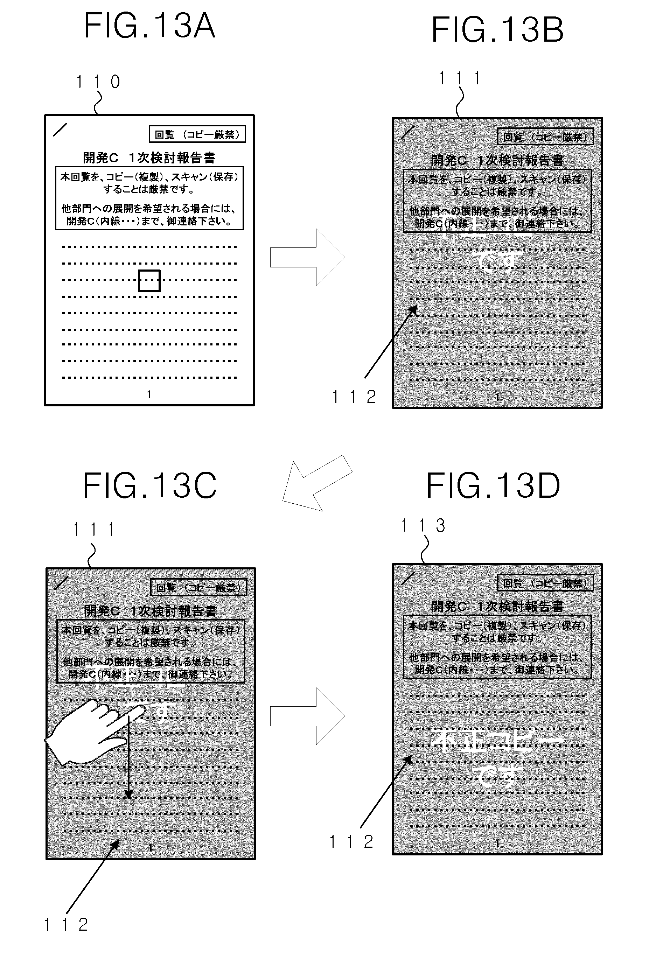

FIGS. 13A to 13D show an example in which the position of the characters which are embedded as a latent image in the background pattern image is adjusted by using the head-mounted display device 30. FIG. 13A shows the sheet 110 before the output setting. FIG. 13B shows the sheet 111 after the output setting (before the adjustment) in case that the output setting for adding the background pattern image is carried out. In the sheet 111 after the output setting (before the adjustment), which is shown in FIG. 13B, the output image 112 corresponding to the background pattern image (in the drawings, the gray background and the white characters are shown) is overlapped with the sheet. Therefore, the user who wears the head-mounted display device 30 can previously (before the printing) confirm the contents (characters and/or an image) which have been already printed on the sheet 110 before the output setting and the position of the characters embedded in the background pattern image to be drawn in accordance with the output setting, and the like, by viewing the sheet 111 after the output setting, which is displayed by carrying out the AR display in the head-mounted display device 30.

FIG. 13C shows the situation in which the user operates the characters included as the latent image in the output image 112 of the background pattern image by using the user's finger or hand to adjust the position of the characters. The above operation is carried out in the state in which the user' s finger or hand contacts with or is in proximity to the sheet which exists in the reality space (the output image which is displayed on the sheet which exists in the augmented reality space). In this embodiment, in order to move the position of the characters below, the drag operation is carried out.

When the head-mounted display device 30 detects the above operation for the characters embedded in the background pattern image, the head-mounted display device 30 changes the output image 112 according to the detected operation, and moves the position of the characters included as the latent image in the background pattern image. FIG. 13D shows the situation in which the characters have been moved (the sheet 113 after the output setting (after the adjustment)). The head-mounted display device 30 outputs the setting information to an external device in order for the image forming apparatus 10 to obtain the processing result corresponding to the output image 112 in which the position of the characters has been adjusted, or reflects the setting contents defined in the output setting information to the setting of the external device.

As described above, the user who wears the head-mounted display device 30 can change the contents of the output setting relating to the background pattern image, by carrying out the operation for moving the characters included in the output image 112 of the background pattern image which is displayed by carrying out the AR display in the head-mounted display device 30, while the user confirms the changed position of the characters by using the AR display.

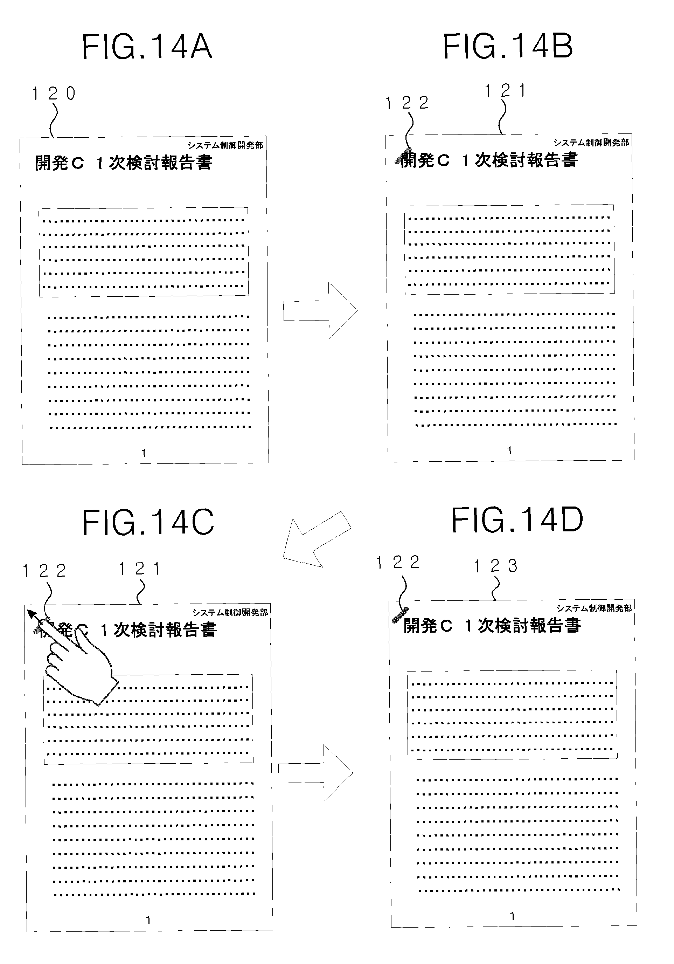

FIGS. 14A to 14D show an example in which the position of the staple is adjusted by using the head-mounted display device 30. FIG. 14A shows the sheet 120 before the output setting. FIG. 14B shows the sheet 121 after the output setting (before the adjustment) in case that the output setting for stapling the sheets is carried out. In the sheet 121 after the output setting (before the adjustment), which is shown in FIG. 14B, the output image 122 corresponding to the staple is overlapped with the sheet at the position designated in the output setting. Therefore, the user who wears the head-mounted display device 30 can previously (before the printing) confirm the positional relation between the contents (characters and/or an image) which have been already printed on the sheet 120 before the output setting and the staple to be added in accordance with the output setting, by viewing the sheet 121 after the output setting (before the adjustment), which is displayed by carrying out the AR display in the head-mounted display device 30.

FIG. 14C shows the situation in which the user operates the output image 122 corresponding to the staple by using the user's finger to move the position of the staple. The above operation is an operation which is carried out in the state in which the user's finger contacts with or is in proximity to the sheet which exists in the reality space (the output image which is displayed on the sheet which exists in the augmented reality space). In this embodiment, in order to move the output image 122 corresponding to the staple to the intended position, the drag operation is carried out.

When the head-mounted display device 30 detects the above operation for the output image 122 corresponding to the staple, the head-mounted display device 30 moves the display position of the output image 122 according to the detected operation. FIG. 14D shows the situation in which the output image 122 has been moved (the sheet 123 after the output setting (after the adjustment)). The head-mounted display device 30 outputs the setting information to an external device in order for the image forming apparatus 10 to obtain the processing result corresponding to the output image 122 of which the position has been adjusted, or reflects the setting contents defined in the output setting information to the setting of the external device.

As described above, the user who wears the head-mounted display device 30 can change the contents of the output setting relating to the additional processing for the staple, by carrying out the operation for directly moving the output image 122 of the staple which is displayed by carrying out the AR display in the head-mounted display device 30, while the user confirms the changed position of the output image 122 by using the AR display.

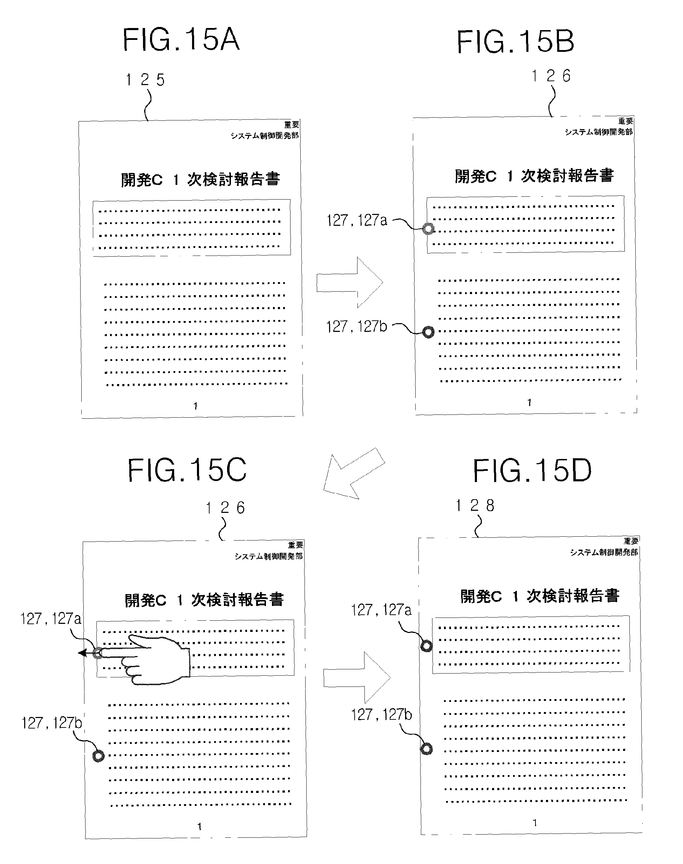

FIGS. 15A to 15D show an example in which the position of the punch holes is adjusted by using the head-mounted display device 30. FIG. 15A shows the sheet 125 before the output setting. FIG. 15B shows the sheet 126 after the output setting (before the adjustment) in case that the output setting for punching the sheet is carried out. In the sheet 126 after the output setting (before the adjustment), which is shown in FIG. 15B, the output image 127 corresponding to the punch holes is overlapped with the sheet at the position designated in the output setting. Therefore, the user who wears the head-mounted display device 30 can previously (before the printing) confirm the positional relation between the contents (characters and/or an image) which have been already printed on the sheet 125 before the output setting and the punch holes to be added in accordance with the output setting, by viewing the sheet 126 after the output setting (before the adjustment), which is displayed by carrying out the AR display in the head-mounted display device 30.

In the example of FIG. 15B, the output image 127a corresponding to the first punch hole is overlapped with the printed area (the area in which the characters and/or the image have been already printed). The output image 127b corresponding to the second punch hole is not overlapped with the printed area. Therefore, the output image 127a corresponding to the first punch hole is indicated by red. The output image 127b corresponding to the second punch hole is indicated by blue. That is, the display form of the output image 127a is different from that of the output image 127b.

FIG. 15C shows the situation in which the user operates the output image 127 corresponding to the punch holes by using the user's finger to move the position of the punch holes. The above operation is an operation which is carried out in the state in which the user's finger contacts with or is in proximity to the sheet which exists in the reality space (the output image which is displayed on the sheet which exists in the augmented reality space). In this embodiment, in order to move the output image 127 corresponding to the punch holes to the intended position, the drag operation is carried out. When one of the punch holes is moved, the output image 127 is moved so as to simultaneously and equally move two punch poles (the output image 127a and the output image 127b).

When the head-mounted display device 30 detects the above operation for the output image 127 corresponding to the punch holes, the head-mounted display device 30 moves the display position of the output image 127 according to the detected operation. FIG. 15D shows the situation in which the output image 127 has been moved (the sheet 128 after the output setting (after the adjustment)). In case of the changed position of the output image 127, two punch holes are not overlapped with the printed area. As a result, both of the output images 127a and 127b corresponding to two punch holes are indicated by blue.

The head-mounted display device 30 outputs the setting information to an external device in order for the image forming apparatus 10 to obtain the processing result corresponding to the output image 127 of which the position has been adjusted, or reflects the setting contents defined in the output setting information to the setting of the external device.

As described above, the user who wears the head-mounted display device 30 can change the contents of the output setting relating to the additional processing for the punch holes, by carrying out the operation for directly moving the output image 127 of the punch holes which are displayed by carrying out the AR display in the head-mounted display device 30, while the user confirms the changed position of the output image 127 by using the AR display.

The examples shown in FIGS. 6A to 15D are illustrative only. In case of other additional processings, such as the fold or the like, the AR display device (the head-mounted display device 30 and/or the portable terminal 60) can also change the contents of the additional processing by operating the output image. Further, the AR display device can output the changed setting information to an external device, such as the image forming apparatus 10 or the like, or can reflect the setting contents defined in the setting information to the external device.

Next, the process which is carried out by the head-mounted display device 30 as the AR display device will be explained by using the flowchart. Because the portable terminal 60 which is the AR display device carries out the same process, the explanation thereof is omitted.

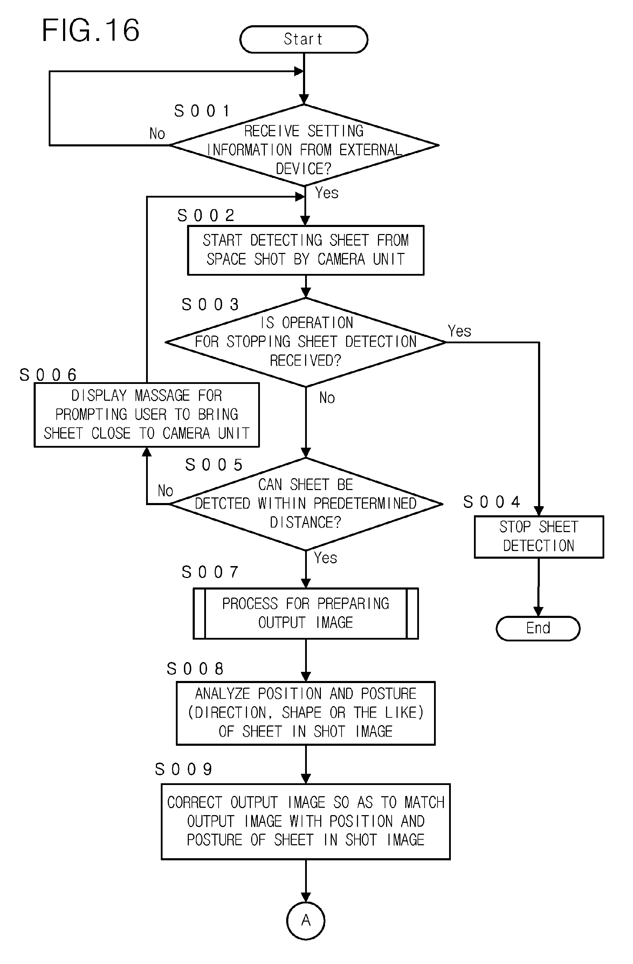

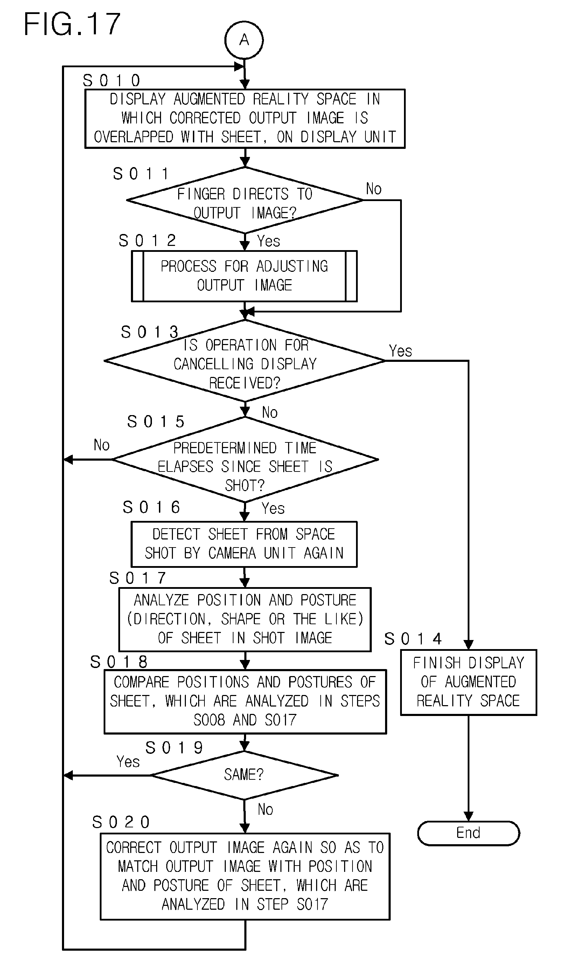

FIGS. 16 and 17 are the flowchart showing the whole process which is carried out by the head-mounted display device 30. The head-mounted display device 30 receives the setting information indicating the contents of the output setting for the image forming apparatus 10 from an external device (for example, the image forming apparatus 10) (Step S001). In addition to the output setting which is actually set to the image forming apparatus 10, the setting information relating to the output setting to be set in the future may be received from a portable terminal or the like.

When the head-mounted display device 30 receives the setting information (Step S001; Yes), the detecting process for detecting the sheet related to the output setting from the reality space which is shot by the camera unit 47 is started (Step S002). Specifically, the head-mounted display device 30 detects the sheet by analyzing the shot image obtained by the camera unit 47, and measures the distance to the detected sheet by using the distance sensor 54.

In case that the instruction for stopping the detecting process is received from the user (Step S003; Yes), the head-mounted display device 30 instructs the camera unit 47 to stop obtaining the image and stops the detecting process (Step S004). Then, the process is ended.

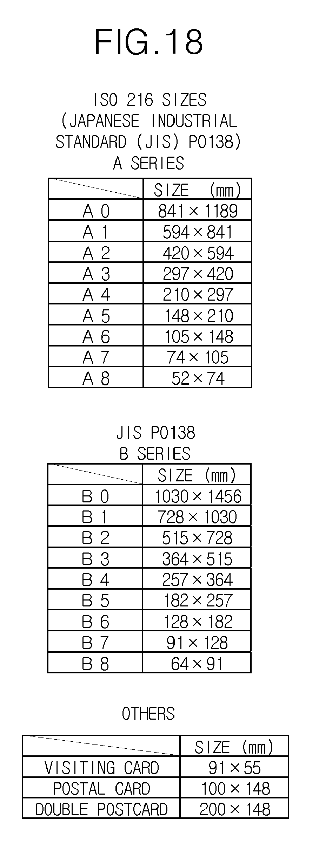

In case that the instruction for stopping the detecting process is not received from the user (Step S003; No), the head-mounted display device 30 judges whether the sheet can be detected within the predetermined distance by the detecting process (Step S005). In this embodiment, the size of the actual sheet is calculated in accordance with the distance to the sheet and the size of the image of the sheet which exists in the shot image. By comparing the calculated size of the actual sheet with the standard sheet sizes registered in the management table (See FIG. 18) which is previously stored in the nonvolatile memory 44, the size of the actual sheet is specified. Then, in case that the specified size of the actual sheet matches the size of the sheet to be processed in accordance with the setting information received in Step S001, the head-mounted display device 30 judges that the sheet related to the setting information is detected.

In case that the sheet cannot be detected (Step S005; No), the head-mounted display device 30 instructs the display unit 31 to display the message "Because the sheet cannot be detected within the current shooting range, please bring the sheet close to the camera unit 47 so as to detect the sheet." (Step S006). Then, the process is continued by returning to Step S002.

In case that the sheet can be detected (Step S005; Yes), the head-mounted display device 30 prepares the output image which simulatedly shows the processing result to be obtained when the image forming apparatus 10 carries out the additional processing in accordance with the output setting defined in the setting information received in Step S001 (Step S007).

Next, the head-mounted display device 30 analyzes the position and the posture of the detected sheet (the direction in which the camera unit 47 directs and the three-dimension shape) (Step S008). Then, the head-mounted display device 30 corrects the output image so as to match the output image with the position and the posture of the sheet, which are analyzed in Step S008 (Step S009).

Next, the head-mounted display device 30 carries out the AR display by overlapping the output image corrected in Step S009 or Step S020 with the sheet detected in Step S005 (Step S010). Therefore, the user who wears the head-mounted display device 30 views the augmented reality space in which the output image is overlapped with the sheet.

In this state, the head-mounted display device 30 judges whether the instruction body, such as the user's hand or finger, directs to the output image on the sheet (Step S011). In case that the instruction body directs to the output image (Step S011; Yes), the adjusting process for adjusting the output image is carried out (Step S012) and the process proceeds to Step S013. In case that the instruction body, such as the user' s hand or finger, does not direct to the output image (Step S011; No), the process proceeds to Step S013.

In Step S012, the head-mounted display device 30 judges whether the user carries out the operation for the output image. In case that the operation is received, the output image is changed according to the contents of the operation, and the setting information corresponding to the changed output image is output to an external device. The detail of the Step S012 will be explained below.

In Step S013, the head-mounted display device 30 judges whether the instruction for cancelling the AR display is received from the user. In case that the instruction for cancelling the AR display is received (Step S013; Yes), the display unit 31 is cleared (Step S014). Then, the process is ended.

In case that the instruction for cancelling the AR display is not received (Step S013; No), the head-mounted display device 30 checks whether the predetermined time elapses since the sheet is shot (Step S015). The predetermined time is, for example, 0.1 second, and can be optionally set. Preferably, the predetermined time is the time period in which the output image can be displayed according to the movement of the sheet, and is not more than 0.2 second. More preferably, the predetermined time is not more than 0.1 second. In case that the processing speed is sufficient, it is desirable that the predetermined time is more shortened.

When the predetermined time elapses (Step S015; Yes), the detecting process for detecting the sheet from the reality space which is shot by the camera unit 47 again (Step S016). Then, the head-mounted display device 30 analyzes the position and the posture of the detected sheet (the direction in which the camera unit 47 directs and the three-dimension shape) (Step S017), and compares the position and the posture of the sheet, which are indicated by the previous analysis result, with the position and the posture of the sheet, which are indicated by the current analysis result (Step S018).

From the above comparison, in case that the position and the posture of the sheet, which are indicated by the previous analysis result, are the same as the position and the posture of the sheet, which are indicated by the current analysis result (Step S019; Yes), the process is continued by returning to Step S010.

From the above comparison, in case that the position and the posture of the sheet, which are indicated by the previous analysis result, are different from the position and the posture of the sheet, which are indicated by the current analysis result (Step S019; No), the head-mounted display device 30 corrects the output image so as to match the output image with the position and the posture of the sheet, which are indicated by the updated analysis result (the analysis result obtained in Step S017) (Step S020). Then, the process is continued by returning to Step S010.

Therefore, even when the user holds the sheet with the user' s hand and the sheet is moved and deformed, the output image is displayed according to the movement and the deformation of the sheet so as to overlap the output image with the sheet.

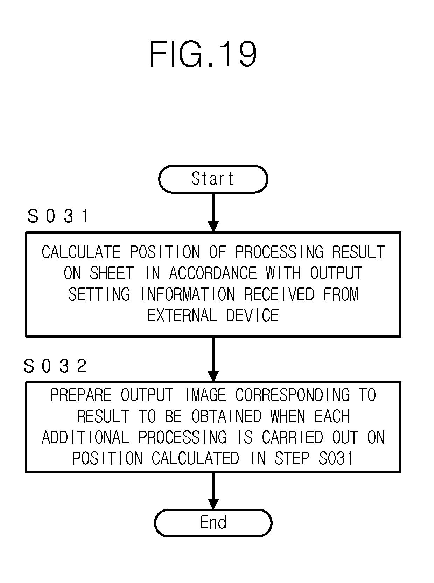

FIG. 19 shows the detail of Step S007 shown in FIG. 16. Based on the setting information received from an external device in Step S001, the CPU 41 of the head-mounted display device 30 calculates the position of the processing result on the sheet, which is obtained in case that the additional processing is carried out in accordance with the output setting defined in the setting information (Step S031). For example, in case that the output setting for punching the sheet is carried out, the position of the punch holes on the sheet is calculated.

Next, the head-mounted display device 30 prepares the output image showing the processing result to be obtained when each additional processing defined in the setting information is carried out on the position calculated in Step S031 (Step S032). Then, the process is ended.

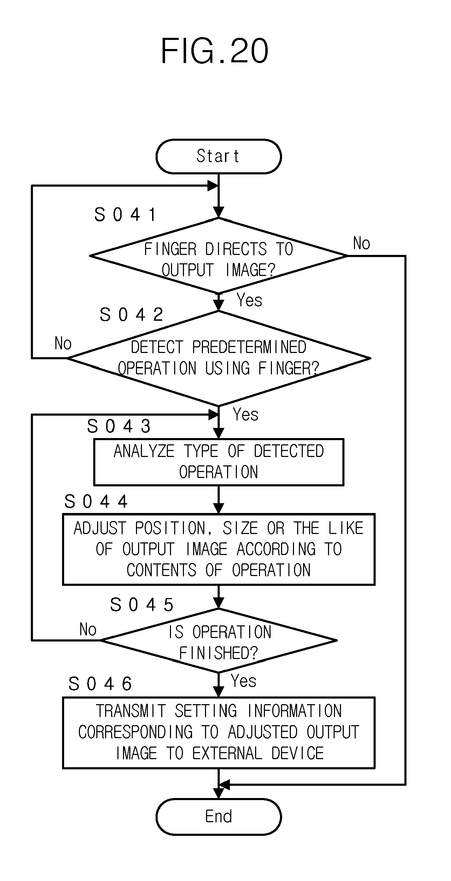

FIG. 20 shows the detail of the adjusting process for adjusting the output image (Step S012 in FIG. 17). The head-mounted display device 30 judges whether the user's finger or hand directs to the output image (Step S041). In case that the user's finger or the like does not direct to the output image (Step S041; No), the process is ended.

In case that the user's finger or hand directs to the output image (Step S041; Yes), the head-mounted display device 30 judges whether any operation is carried out for the output image with the user's finger or hand (Step S042). In this embodiment, when the operation is carried out (or started) in the state in which the user's finger or hand contacts with or is in proximity to the sheet (for example, within 5cm) which exists in the reality space, the head-mounted display device 30 judges that the operation is carried out for the output image. On the other hand, when the operation is carried out (or started) in the state in which the user's finger or the like is apart from the sheet, the head-mounted display device 30 judges that the operation is not carried out for the output image. Therefore, the head-mounted display device 30 avoids various types of motions which are carried out by the user apart from the sheet, from being wrongly recognized as the operations for the output image.

The operation may be an operation which is carried out in the state in which the user's finger or hand contacts with or is in proximity to the sheet which exists in the reality space or an operation which is started at least in the state in which the user's finger or hand contacts with or is in proximity to the sheet. It is judged whether the operation in which the user's finger or hand contacts with or is in proximity to the sheet only at the start of the operation is recognized as the operation for the output image, depending on the type of the operation. For example, in the operation, such as the drag operation, the pinch-in operation, the pinch-out operation, and the like, it is necessary that the user' s finger or hand contacts with or is in proximity to the sheet from the start of the operation to the finish of the operation. On the other hand, in the operation in which the user approaches user's hand or finger to the sheet or distances the user's hand or finger from the sheet, it is necessary that the user's finger or hand contacts with or is in proximity to the sheet only at the start of the operation.

For example, the operation for adjusting the density of the stamp can be carried out as follows. Firstly, after the user's hand or finger contacts with the output image corresponding to the stamp, the user's hand or finger is separated from the sheet by a predetermined distance and is held for a predetermined time (for example, 1 second). Then, in case that the user distances the user' s hand or finger from the sheet, the density of the stamp is decreased. In case that the user approaches the user's hand or finger to the sheet, the density of the stamp is increased.

In case that the head-mounted display device 30 detects any operation for the output image (Step S042; Yes), the head-mounted display device 30 analyzes the type of the detected operation (Step S043). That is, the type of the operation, such as the drag operation, the pinch-out operation, the pinch-in operation, or the like, is specified. Further, the contents of the adjustment of the output image, which is instructed by the detected operation, such as the position adjustment, the size adjustment, the adjustment for the length or the width, the density adjustment or the like, are specified.

Then, the position, the size or the like of the output image is adjusted according to the contents of the adjustment instructed by the operation. In this embodiment, the output image is changed in real time by synchronizing with the movement of the user's hand or finger which is used for the operation (Step S044).

The head-mounted display device 30 judges whether the operation for the output image is finished (Step S045). In case that the operation is continued (Step S045; No), the process returns to Step S043. In case that the operation is finished (Step S045; Yes), the head-mounted display device 30 prepares the setting information indicating the contents of the output setting in order for the image forming apparatus 10 to obtain the processing result corresponding to the adjusted (changed) output image, and transmits the prepared setting information to an external device (for example, the device which transmits the setting information received in Step S001). Further, the head-mounted display device 30 reflects the setting contents defined in the setting information to the setting contents of the external device (Step S046). Then, the process is ended. As the process for reflecting the setting contents defined in the setting information to the setting contents of the external device, for example, the setting window which corresponds to the setting contents changed in accordance with the adjustment for the output image and in which the changed setting contents are reflected, may be displayed on the operation panel of the external device.

For example, in case that the operation for adjusting the position of the stamp is carried out, the head-mounted display device 30 transmits the setting information which is obtained by changing the stamp position information defined in the setting information received in Step S001 to the value corresponding to the adjusted position of the output image, to the external device and reflects the setting to the external device.

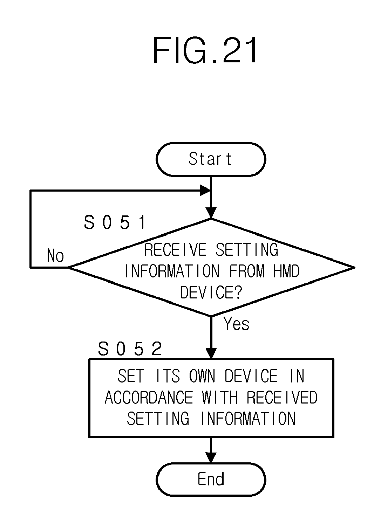

FIG. 21 shows the process which is carried out by the external device (the image forming apparatus 10 or the like) which receives the setting information output from the head-mounted display device 30 in Step S046 of FIG. 20.

The external device, such as the image forming apparatus 10, waits for the above setting information to be transmitted from the head-mounted display device 30 (Step S051; No). Then, when the external device receives the setting information (Step S051; Yes), the external device reflects the setting contents defined in the received setting information to itself and changes its own setting state (Step S052).

As described above, in the AR display device according to the embodiment (the head-mounted display device 30 and/or the portable terminal 60), the setting information for the image forming apparatus 10 is obtained from the image forming apparatus 10 or the like. The output image which simulatedly shows the processing result to be obtained in case that the image forming apparatus 10 carries out the additional processing defined in the setting information is prepared. Further, the augmented reality space in which the prepared output image is overlapped with the sheet which exists in the reality space is displayed. Therefore, the user can previously confirm the processing result corresponding to the output setting without actually printing the document.

Then, in case that the user confirms that the processing result is not suitable by using the AR display, it is possible to easily change the setting contents of the output setting by carrying out the operation, such as the movement of the output image, the change in the size of the output image or the like, for the output image displayed by carrying out the AR display. Therefore, it is possible to change the setting contents while the user confirms the changed processing result by using the AR display. Further, because the setting information corresponding to the changed output image is prepared and is output to an external device, by reflecting the setting information to the external device, such as the image forming apparatus 10 or the like, to operate the external device, it is possible for the actual external device to easily obtain the processing result which is adjusted by using the AR display.

Further, because it is possible to confirm the processing result corresponding to the output setting by using the AR display in which the output image is overlapped with the sheet which exists in the reality space, for example, the troublesome task for reading an original by using a scanner is not required. Therefore, the user can easily and quickly confirm the processing result corresponding to the output setting.

Even though the user moves the sheet, the output image displayed in the augmented reality space is changed according to the movement of the sheet. Therefore, it is not necessary to fix the sheet. Further, by intentionally moving the sheet, it is possible to confirm the finish state from various directions.

Because the augmented reality space in which the output image is overlapped with the actual sheet is displayed, it is possible to adjust the setting contents while the user confirms the positional relation and the overlapping state between the characters and/or the image which have been already printed on the actual sheet and the processing result of the additional processing corresponding to the output setting.

In the above examples, the head-mounted display device 30 and/or the portable terminal 60 prepares and corrects the output image, overlaps the output image with the sheet, receives the operation for the output image, changes the output image according to the operation and outputs the setting information. However, the process contents setting device 130 (See FIG. 1) which is separated from the head-mounted display device 30 or the portable terminal 60, may carry out the above process, and the head-mounted display device 30 and/or the portable terminal 60 may display the augmented reality space including the output image in accordance with the instruction from the process contents setting device 130.

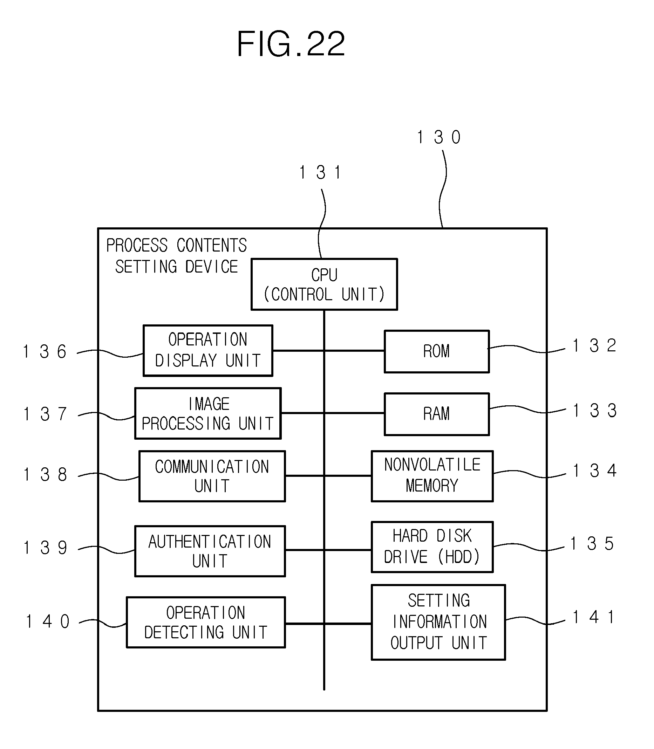

FIG. 22 is a block diagram showing the schematic configuration of the process contents setting device 130. The process contents setting device 130 comprises a CPU 131 for controlling the whole operation of the process contents setting device 130. The CPU 131 is connected to a ROM 132, a RAM 133, a nonvolatile memory 134, a hard disk drive 135, an operation display unit 136, an image processing unit 137, a communication unit 138, an authentication unit 139, an operation detecting unit 140, a setting information output unit 141 and the like via a bus. By executing the programs stored in the ROM 132 by the CPU 131, the functions of the process contents setting device 130 are realized.

The process contents setting device 130 obtains the output setting information via the communication unit 138 from the image forming apparatus 10 or the like. That is, the communication unit 138 functions as the setting information obtaining unit for obtaining the setting information from an external device, which is setting information indicating the process contents of the process to be carried out for the predetermined object, such as the sheet, by the image forming apparatus 10 or the like. Further, the process contents setting device 130 obtains the shot image obtained by the camera and the distance information detected by the distance sensor from the AR display device, such as the head-mounted display device, the portable terminal 60 or the like, and detects the sheet which exists in the reality space which is shot by the camera of the AR display device and the posture of the sheet. That is, the CPU 131 functions as the object detecting unit for detecting the sheet in the reality space by analyzing the video or the like which is obtained by the camera of the AR display device. Then, the CPU 131 prepares the output image which simulatedly shows the processing result to be obtained when the image forming apparatus 10 or the like carries out the additional processing in accordance with the output setting information obtained from the image forming apparatus 10 or the like, and corrects the output image according to the posture of the sheet which exists in the reality space. Further, the process contents setting device 130 instructs the AR display device to display the augmented reality space in which the corrected output image is overlapped with the sheet which exists in the reality space. That is, the CPU 131 functions as the display control unit.

For example, the process contents setting device 130 prepares the corrected output image and the information indicating the position on which the output image is overlapped, to transmit the prepared output image and the information to the head-mounted display device 30. Further, the process contents setting device 130 instructs the head-mounted display device 30 to display the above augmented reality space by carrying out the AR display.

Further, the operation detecting unit 140 of the process contents setting device 130 detects the operation for the output image in the augmented reality space, which is carried out by the user, and the CPU 131 changes the output image according to the detected operation. For example, the process contents setting device 130 obtains the shot image obtained by the camera and the distance information detected by the distance sensor from the AR display device, and detects the operation carried out for the simulation image by the user from the obtained image and the distance information. Then, when the operation for adjusting the position or the size of the simulation image or the like is received from the user, the process contents setting device 130 changes the output image according to the received operation, such as the movement or the enlargement of the output image, and transmits the information indicating the changed simulation image to the AR display device to instruct the AR display device to display the output image. When the operation for changing the output image is finished, the setting information output unit 141 outputs the setting information to the external device (for example, the image forming apparatus 10 or the like) in order for the image forming apparatus 10 to obtain the processing result corresponding to the changed output image, and reflects the setting contents.

Therefore, the user can change the setting contents in the augmented reality space by carrying out the operation for the output image while the user confirms the changed state. Further, because the setting information corresponding to the changed output image is output to an external device, by reflecting the output setting information to the image forming apparatus 10 or the like, it is possible for the actual image forming apparatus 10 or the like to easily obtain the changed processing result which is confirmed by using the augmented reality space.

The process contents setting device 130 is configured as the portable terminal as shown in FIG. 1 or may be configured by a PC, a server or the like.

As described above, the embodiment is explained by using the drawings. However, in the present invention, the concrete configuration is not limited to the above embodiment. In the present invention, various modifications of the above embodiment or the addition of various functions or the like to the embodiment can be carried out without departing from the gist of the invention.

Each additional processing shown in the embodiment is illustrative only. An optional processing which is carried out by the image forming apparatus 10 and in which the processing result is obtained in an object to be output, can be adopted as the additional processing.

Further, in the embodiment, the object in which the simulation image is overlapped is the paper sheet, the device for carrying out the process for the object is the image forming apparatus 10, and the process contents are the additional processing. The object, the device and the process contents are not limited to these. For example, the object may be clothes, the device may be a device for printing a design on the clothes, and the process may be a process for printing the design on the clothes. As another example, the object may be a stone or a rock, the device may be a device for grinding the stone or the rock to form the stone or the rock, and the process may be a process for grinding the stone or the rock to form the stone or the rock.

That is, the AR display device according to the embodiment comprises an object detecting unit configured to detect a predetermined object in a reality space shot by a camera; a display control unit configured to prepare a simulation image which simulatedly shows a processing result to be obtained in case that a predetermined device carries out a predetermined process for a predetermined object and to instruct the AR display device to display an augmented reality space in which the simulation image is overlapped with the detected predetermined object; an operation detecting unit configured to detect an operation carried out by a user for the simulation image in the augmented reality space displayed by the AR display device; and a setting information output unit configured to output the setting information in order for the predetermined device to obtain the processing result corresponding to the simulation image which is changed by the display control unit according to the operation detected by the operation detecting unit. In the above AR display device, the object, the device and the process may be optional.

For example, in the present invention, in case the device is a device for grinding a stone, the augmented reality space in which the output image for designating the grinding method is projected to the stone which exists in the reality space may be displayed, the operation for changing the output image may be received and the setting information for grinding the stone in accordance with the changed output image may be output.

In this embodiment, the position and the posture of the sheet is detected by analyzing the shot image obtained by the camera unit 47 and by measuring the distance to each portion using the distance sensor 54. However, the method for detecting the position and the posture of the sheet is not limited to this.

In this embodiment, whether the instruction body, such as the user's hand or finger, contacts with the sheet is judged according to whether the difference between the distance to the sheet and the distance to the user's hand or finger is within the acceptable range. However, the method for judging the contact with the sheet is not limited to this. For example, the above contact may be judged by analyzing the video obtained by a stereo camera.

The sheet before the output setting, which is shown in the embodiment, may be an original to be copied, or an output object which is printed in accordance with the print data. In case of the original to be copied, by using the head-mounted display device 30 and/or the portable terminal 60 according to the embodiment, the user can confirm and adjust the finish state corresponding to the output setting by carrying out the AR display before the original is copied. In case of the print data, before the printing is carried out in accordance with the print data, it is possible to confirm and adjust the processing result to be obtained in case that the additional processing corresponding to the output setting is carried out, by carrying out the AR display.

In this embodiment, the head-mounted display device 30 in which the image is overlapped with the outside scene by using the half mirrors 35, is used. However, a VR (Virtual Reality) type of head-mounted display may be used. In the VR type of head-mounted display, when the user wears the head-mounted display, the user cannot look at the outside scene and can look at only the projected image. In this case, like the portable terminal 60, the image obtained by combining the output image with the camera image may be displayed.

One of the objects of the above embodiments is to provide an AR display device, a process contents setting device, a process contents setting method and a non-transitory computer-readable recording medium in which a user can change the setting of the process contents while the user confirms the processing result of the process to be carried out for a predetermined object by a predetermined device by using an image.

In this embodiment, a simulation image which simulatedly shows a processing result to be obtained in case that a predetermined device carries out a predetermined process for the predetermined object, is prepared, and the augmented reality space in which the simulation image is overlapped with the predetermined object which exists in the reality space, is displayed by carrying out the AR display. Then, when the instruction, such as the movement, the enlargement or the like of the simulation image, is received from the user by the operation, such as the drag operation, the pinch-out operation or the like, for the simulation image which is displayed by carrying out the AR display, the simulation image is changed according to the operation and the setting information is output in order for the predetermined device to obtain the processing result corresponding to the changed simulation image. Therefore, the user can change the setting of the process contents of the process to be carried out for the object by the predetermined device while the user confirms the processing result by using the AR display. Further, the setting information corresponding to the changed process contents is output, it is possible for the actual device to obtain the processing result corresponding to the simulation image by using the output setting information.

In this embodiment, because the setting information corresponding to the changed simulation image is output to the predetermined device and the setting contents defined in the setting information are reflected to the predetermined device, it is possible for the actual device to easily obtain the changed processing result which is confirmed in the augmented reality space.

In this embodiment, the operation for the simulation image is limited to the operation which is started in the state in which the instruction body, such as the user's finger or the like, contacts with the object or in the state in which the instruction body is in proximity to the object. Therefore, an unintentional motion which is carried out apart from the object is avoided from being wrongly recognized as the operations for the simulation image. The instruction body is an object, such as the user's hand or finger, which is used for carrying out the operation for the simulation image, and may be an object, such as a pen, a stick or the like.

In this embodiment, by deleting the simulation image, the setting corresponding to the deleted simulation image is deleted (cancelled).

In this embodiment, an initial simulation image is prepared in accordance with the setting information obtained from an external device, and then the augmented reality space is displayed.

In this embodiment, the posture of the object which exists in the reality space is detected, and the simulation image is corrected so as to match the simulation image with the posture of the object which exists in the reality space. Then, the augmented reality space in which the corrected simulation image is overlapped with the object which exists in the reality space, is displayed by carrying out the AR display.

According to the AR display device, the process contents setting device, the process contents setting method and the non-transitory computer-readable recording medium, the user can change the setting of the process contents while the user confirms the processing result of the process to be carried out for a predetermined object by a predetermined device by using an image in the augmented reality space.

## Claims

1. An AR display device (30, 60), comprising:
a display unit (31, 69) configured to display an augmented reality space in which an image is overlapped with a reality space;
a camera (47, 66) configured to shoot the reality space corresponding to the augmented reality space displayed by the display unit (31, 69);
an object detecting unit (41, 61) configured to detect a predetermined object in the reality space shot by the camera (47, 66);
a display control unit (41, 61) configured to prepare a simulation image which simulatedly shows a processing result to be obtained in case that a predetermined device (10) carries out a predetermined process for the predetermined object and to instruct the display unit (31, 69) to display the augmented reality space in which the simulation image is overlapped with the predetermined object detected by the object detecting unit (41, 61);
an operation detecting unit (56, 75) configured to detect an operation carried out by a user for the simulation image in the augmented reality space displayed by the display unit (31, 69); and
a setting information output unit (57, 76) configured to output setting information in order for the predetermined device (10) to obtain the processing result corresponding to the simulation image,
wherein the display control unit (41, 61) changes the simulation image according the operation detected by the operation detecting unit (56, 75), and
the setting information output unit (57, 76) outputs the setting information corresponding to the changed simulation image to the predetermined device (10) and reflects setting contents defined in the setting information to the predetermined device (10).

2. The AR display device (30, 60) of claim 1, wherein the operation detecting unit (56, 75) detects the operation for the simulation image, which is carried out or started by using an instruction body in a state in which the instruction body contacts with the predetermined object or in a state in which the instruction body is in proximity to the predetermined object.

3. The AR display device (30, 60) of claim 1 or 2, wherein the operation for the simulation image is at least one of an operation for moving the simulation image, an operation for adjusting a size of the simulation image, an operation for adjusting a density of the simulation image and an operation for deleting the simulation image.

4. The AR display device (30, 60) of any one of claims
1 to 3, wherein the display control unit (41, 61) deletes the simulation image in case that the simulation image is moved by the operation to a position on which the simulation image is not overlapped with the predetermined object.

5. The AR display device (30, 60) of any one of claims 1 to 4, further comprising: a setting information obtaining unit (51, 70) configured to obtain the setting information from an external device, which is setting information indicating process contents of the process to be carried out for the predetermined object by the predetermined device (10),
wherein the display control unit (41, 61) prepares the simulation image in accordance with the setting operation obtained by the setting information obtaining unit (51, 70).

6. The AR display device (30, 60) of any one of claims 1 to 5, wherein the object detecting unit (41, 61) detects the predetermined object which exists in the reality space shot by the camera (47, 66), and a posture of the predetermined object, and
the display control unit (41, 61) instructs the display unit (31, 69) to display the augmented reality space in which the simulation image which is corrected so as to match the simulation image with the posture of the predetermined object is overlapped with the predetermined object.

7. The AR display device (30, 60) of any one of claims 1 to 6, wherein the predetermined device (10) is a printing device and the predetermined object is a paper sheet.

8. The AR display device (30, 60) of claim 7, wherein the predetermined process includes at least one of a process for adding a stamp image to an image to be printed, a center erase process for erasing a black copy mark caused along a center line by copying a spread book, a process for adjusting a print area, a process for adding a background pattern image, a process for punching the paper sheet and a process for binding the paper sheet by a staple.

9. A process contents setting device (130), comprising:
an object detecting unit (131) configured to detect a predetermined object in a reality space shot by a camera (47, 66) of an AR display device (30, 60), the AR display device (30, 60) comprising: a display unit (31, 69) configured to display an augmented reality space in which an image is overlapped with the reality space, and the camera (47, 66) configured to shoot the reality space corresponding to the augmented reality space displayed by the display unit (31, 69);
a display control unit (131) configured to prepare a simulation image which simulatedly shows a processing result to be obtained in case that a predetermined device (10) carries out a predetermined process for the predetermined object and to instruct the AR display device (30, 60) to display the augmented reality space in which the simulation image is overlapped with the predetermined object detected by the object detecting unit (131);
an operation detecting unit (140) configured to detect an operation carried out by a user for the simulation image in the augmented reality space displayed by the AR display device (30, 60); and
a setting information output unit (141) configured to output setting information in order for the predetermined device (10) to obtain the processing result corresponding to the simulation image,
wherein the display control unit (131) changes the simulation image according the operation detected by the operation detecting unit (140), and
the setting information output unit (141) outputs the setting information corresponding to the changed simulation image to the predetermined device (10) and reflects setting contents defined in the setting information to the predetermined device (10).

10. The process contents setting device (130) of claim 9, the operation detecting unit (140) detects the operation for the simulation image, which is carried out or started by using an instruction body in a state in which the instruction body contacts with the predetermined object or in a state in which the instruction body is in proximity to the predetermined object.

11. The process contents setting device (130) of claim 9 or 10, wherein the operation for the simulation image is at least one of an operation for moving the simulation image, an operation for adjusting a size of the simulation image, an operation for adjusting a density of the simulation image and an operation for deleting the simulation image.

12. The process contents setting device (130) of any one of claims 9 to 11, wherein the display control unit (131) deletes the simulation image in case that the simulation image is moved by the operation to a position on which the simulation image is not overlapped with the predetermined object.

13. The process contents setting device (130) of any one of claims 9 to 12, further comprising: a setting information obtaining unit (138) configured to obtain the setting information from an external device, which is setting information indicating process contents of the process to be carried out for the predetermined object by the predetermined device (10),
wherein the display control unit (131) prepares the simulation image in accordance with the setting operation obtained by the setting information obtaining unit (138).

14. The process contents setting device (130) of any one of claims 9 to 13, wherein the object detecting unit (131) detects the predetermined object which exists in the reality space shot by the camera (47, 66), and a posture of the predetermined object, and
the display control unit (131) instructs the AR display device (30, 60) to display the augmented reality space in which the simulation image which is corrected so as to match the simulation image with the posture of the predetermined object is overlapped with the predetermined object.

15. The process contents setting device (130) of any one of claims 9 to 14, wherein the predetermined device (10) is a printing device and the predetermined object is a paper sheet.

16. The process contents setting device (130) of claim 15, wherein the predetermined process includes at least one of a process for adding a stamp image to an image to be printed, a center erase process for erasing a black copy mark caused along a center line by copying a spread book, a process for adjusting a print area, a process for adding a background pattern image, a process for punching the paper sheet and a process for binding the paper sheet by a staple.

17. A process contents setting method for using an AR display device (30, 60) to receive a setting of process contents of a process to be carried out for a predetermined object by a predetermined device (10), the AR display device (30, 60) comprising: a display unit (31, 69) configured to display an augmented reality space in which an image is overlapped with a reality space, and a camera (47, 66) configured to shoot the reality space corresponding to the augmented reality space displayed by the display unit (31, 69), and the method comprising:
detecting the predetermined object in the reality space shot by the camera (47, 66);
preparing a simulation image which simulatedly shows a processing result to be obtained in case that the predetermined device (10) carries out a predetermined process for the predetermined object and instructing the AR display device (30, 60) to display the augmented reality space in which the simulation image is overlapped with the detected predetermined object;
detecting an operation carried out by a user for the simulation image in the augmented reality space displayed by the AR display device (30, 60);
changing the simulation image according the detected operation; and
outputting setting information corresponding to the changed simulation image to the predetermined device (10); and
reflecting setting contents defined in the setting information to the predetermined device (10).

18. The process contents setting method of claim 17, wherein in the detecting of the operation, the operation for the simulation image, which is carried out or started by using an instruction body in a state in which the instruction body contacts with the predetermined object or in a state in which the instruction body is in proximity to the predetermined object, is detected.

19. A non-transitory computer-readable recording medium storing a program, wherein the program causes an information processing apparatus to function as the AR display device (30, 60) of any one of claims 1 to 8.

20. A non-transitory computer-readable recording medium storing a program, wherein the program causes an information processing apparatus to function as the process contents setting device (130) of any one of claims 9 to 16.
